(19) Europäisches Patentamt
European Patent Office
Office européen des brevets

(11) Publication number: 0 407 684 A1

(12) EUROPEAN PATENT APPLICATION

(21) Application number: 90102802.7

(22) Date of filing: 13.02.90

(51) Int. Cl.5: B01D 71/52, B01D 67/00, D01D 5/24, C08J 9/28, C08J 5/18, D01F 6/66, //C08L71:00

(30) Priority: 14.07.89 US 380058

(43) Date of publication of application: 16.01.91 Bulletin 91/03

(84) Designated Contracting States: AT BE CH DE DK ES FR GB GR IT LI LU NL SE

(71) Applicant: THE DOW CHEMICAL COMPANY
2030 Dow Center Abbott Road
Midland, MI 48640(US)

(72) Inventor: Beck, Henry Nelson
390 La Vista Road
Walnut Creek CA 94598(US)
Inventor: Lundgard, Richard A.
4317 Palomar Dr.
Antioch, CA 94509(US)
Inventor: Chau, Chieh-Chun
4205 Bluebird Dr.
Midland, MI 48640(US)
Inventor: Wessling, Ritchie A.
1126 Shattuck Ave.
Berkeley, CA 94707(US)
Inventor: Mahoney, Robert D.
240 Daylight Place
Danville, CA 94526(US)

(74) Representative: Casalonga, Axel et al
BUREAU D.A. CASALONGA - JOSSE
Morassistrasse 8
D-8000 München 5(DE)

(54) **Film, fiber, and microporous membranes prepared from poly(etheretherketone) dissolved in high boiling point polar organic solvents.**

(57) A process is described for making useful porous articles from poly(etheretherketone)-type (PEEK) polymers. High boiling point polar organic solvents are solvents for poly(etheretherketone)-type polymers (PEEK). Solutions of PEEK may be used to form PEEK articles such as microporous membranes of films and fibers, including microporous hollow fibers. The microporous PEEK is useful as microfiltration or ultrafiltration membranes. PEEK articles, including microporous sheet membranes and microporous hollow membrane fibers are disclosed.

EP 0 407 684 A1

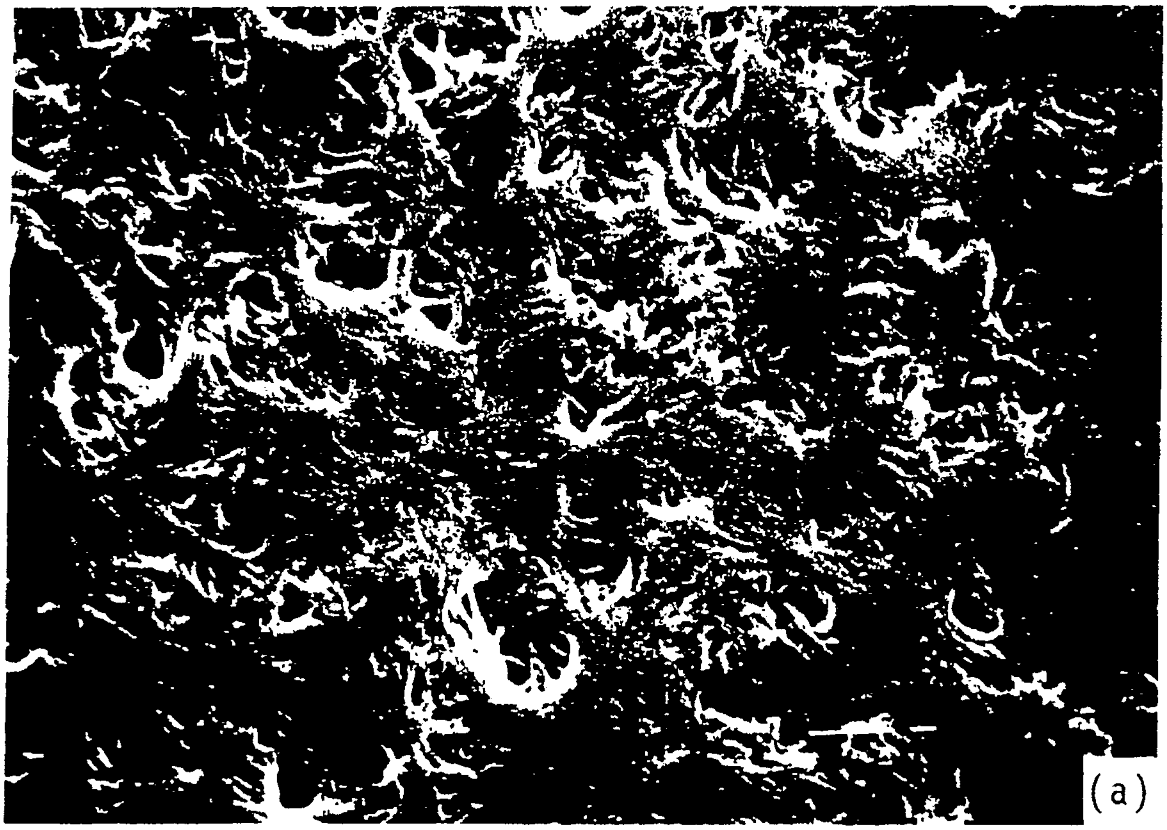


Fig. 1A

# FILM, FIBER, AND MICROPOROUS MEMBRANES PREPARED FROM POLY(ETHERETHERKETONE) DISSOLVED IN HIGH BOILING POINT POLAR ORGANIC SOLVENTS

Microporous polymer membranes are well known products in the art of separations technology. Also well known are polymer membranes, often in film or fiber form of asymmetric porosity, useful for ultrafiltration and reverse osmosis. Such membrane films are conventionally formed by dissolving the polymer in a solvent, casting the solubilized polymer as a thin film on a support followed by coagulation of the polymer by immersion of the support and polymer film into a bath of liquid in which the polymer solvent is miscible, but which is not a solvent for the polymer.

Poly(oxy-1,4-phenyleneoxy-1,4-phenylene-carbonyl-1,4-phenylene), more commonly known as poly-(etheretherketone), or PEEK, displays advantageous chemical and physical properties for many uses. PEEK is not known to be affected by common organic solvents at room temperature. PEEK is also resistant to acids and bases, with the exception of strong acids in high concentrations. The high melting point, about 367° C, high glass transition temperature, about 145° C, low solubility and high chemical resistance would make PEEK a material of choice for microporous membrane separations applications for harsh environments. The general insolubility of PEEK, however, while a useful and advantageous property of a membrane in place, complicates the formation of membranes from PEEK. Microporous PEEK membranes have not heretofore been reported.

PEEK solubility has been reported in concentrated sulfuric acid (German Patent 3,321,860) and U.S. patent to Rose et al., 4,320,224, column 9, line 5. Membranes have been cast from PEEK dissolved in concentrated $H_2SO_4$. However, the membranes formed are no longer PEEK, but rather have been sulfonated. As a consequence of the change of chemical composition, the membranes no longer display the advantageous properties of PEEK and are known to swell upon prolonged exposure to water. Jin, X. et al., Br. Polym. J. , 17, 4 (1985). Bishop, M. T. et al., Macromolecules , 1985, 18, 86.

What is needed is a process for preparing porous film, porous fiber, hollow porous fibers, and other articles from PEEK-type polymers at temperatures below the melting temperature of the PEEK-type polymer. What is needed is a process for preparing articles of poly(etheretherketone)-type polymers, such as microporous membranes and fibers, using solvents or mixtures of solvents and non-solvents which do not chemically modify or degrade the polymer so that the high strength and solvent resistance characteristics of the polymer are retained by the fabricated articles. It would be desirable to form microporous membranes of PEEK from solutions thereof which membranes are not sulfonated and thus do not swell upon exposure to water.

This invention provides a method for the preparation of microporous semi-permeable membrane films and hollow microporous semi-permeable membrane fibers composed of PEEK which do not swell when exposed to water. Further, this invention provides for the preparation of ultrafiltration and microfiltration semi-permeable membranes comprising PEEK. The PEEK membranes have substantially improved transport flux without sacrifice of selectivity. Hollow fibers and semi-permeable flat sheet membranes suitable as an asymmetrical ultrafiltration (UF) membrane and as support for a composite reverse osmosis (RO) membrane can now be prepared from PEEK.

A key element of the process of the invention is that PEEK may be dissolved by certain high melting point polar organic solvents. The process described herein permits the preparation of solid fibers, porous hollow fibers, porous sheet membranes and useful articles of PEEK at temperatures significantly below the melting temperature. Microporous membranes in sheet form may be prepared according to the process of the invention by casting films of PEEK. Microporous membranes in solid or hollow fiber form may be prepared according to the process of the invention by extruding PEEK dissolved in certain high melting point polar organic solvents.

The process of the invention for preparing a film of PEEK-type polymer, comprises: dissolving the PEEK-type polymer in a polar organic solvent having a six-membered ring structure and a boiling point of 175° C to 420° C; and casting the PEEK-type polymer solution onto a supporting structure comprising a smooth impervious surface.

A preferred process of the invention for preparing a microporous poly(etheretherketone)-type (PEEK) membrane film or fiber comprises:

A. forming a mixture of

(i) at least one unsulfonated PEEK-type polymer, and

(ii) a polar organic solvent having at least one six membered ring structure and a boiling point in a range between 175° C and 420° C capable of dissolving at least 10 weight percent of the PEEK-type polymer at a membrane or fiber extrusion or casting temperature;

B. heating the mixture to a temperature at which the mixture becomes a homogeneous fluid;
C. extruding or casting the homogeneous fluid such that a membrane film or fiber is formed;
D. quenching or coagulating the membrane film or fiber such that the membrane solidifies; and
E. leaching the membrane film or fiber such that at least a portion of the solvent for the PEEK-type polymer is removed from the membrane.

Figure 1A is a scanning electron photomicrograph of the surface exposed to air of a PEEK membrane cast from a quickly cooled solution of benzophenone solvent.

Figure 1B is a scanning electron photomicrograph of the surface in contact with a glass plate during formation of a PEEK membrane cast from a quickly cooled solution of benzophenone solvent.

Figure 2A is a scanning electron photomicrograph of the surface exposed to air of a PEEK membrane cast from a slowly cooled solution of benzophenone solvent.

Figure 2B is a scanning electron photomicrograph of the surface in contact with a glass plate during formation of a PEEK membrane cast from a slowly cooled solution of benzophenone solvent.

Figure 3 is a scanning electron photomicrograph of the surface exposed to air of a PEEK membrane cast from a solvent of α-chloronaphthalene.

Figure 4 is a composite graph of temperature solubility data for PEEK in selected solvents.

Poly(etheretherketone)-type (PEEK-type) polymers refer to polymers containing predominantly ether, -R-O-R-, and ketone, -R-CO-R-, linkages, wherein R is a divalent aromatic group. R is preferably a substituted or unsubstituted phenylene of Formula 1:

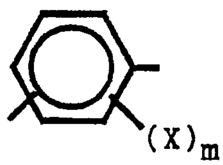

Formula 1

wherein
X is independently in each occurrence hydrogen, a $C_{1-4}$ alkyl, or a halogen; and
m is an integer between 0 and 4 inclusive.

X is preferably hydrogen, methyl, ethyl, chlorine, bromine, or fluorine.

Examples of poly(etheretherketone)-type polymers within the scope of this invention include poly-(etherketone) (PEK), poly(aryletherketone) (PAEK), poly(etheretherketone) (PEEK), poly(etherketoneketone) (PEKK), poly(etheretheretherketone) (PEEEK), poly(etheretherketoneketone) (PEEKK), poly-(etherketoneetherketoneketone) (PEKEKK), and mixtures thereof. An especially preferred poly-(etheretherketone)-type polymer for use in this invention is PEEK, that is, poly(oxy-p-phenyleneoxy-p-phenylenecarbonyl-p-phenylene). PEEK is comprised of the repeat units described in Formula 2.

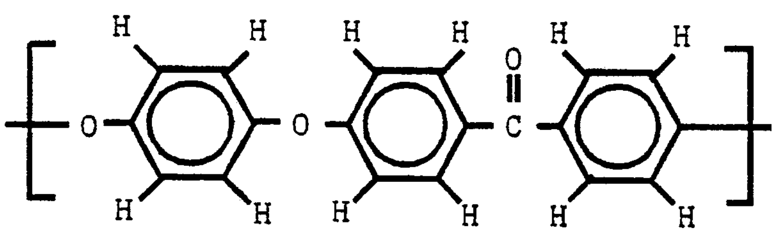

Formula 2

Another especially preferred poly(etheretherketone)-type polymer for use in this invention is PEK, that is, poly(oxy-1,4-phenylenecarbonyl-1,4-phenylene). PEK is comprised of the repeat units described in Formula 3.

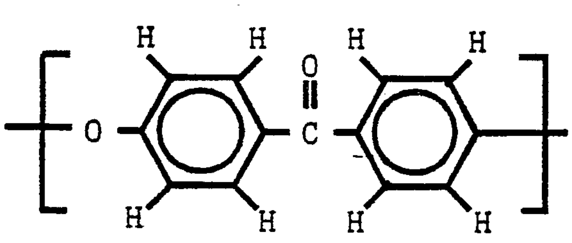

Formula 3

Commercially available PEEK, for example, VictrexTM PEEK 450 (TMTrademark of ICI Americas), has a glass transition temperature of about 143 degrees Celsius and a melting point of about 334 degrees Celsius. Such commercially available PEEK possesses a tensile strength of about 91.7 MPa (13,300 psi). (ASTM Test Method D638), an elongation at break of about 50 percent (ASTM Test Method D638 at about 23 degrees Celsius and test speed of 0.5 cm/min (0.2 in./min.), an ultimate shear strength of about 95 MPa (13,800 psi) (ASTM Test Method D3846). A shear modulus of 1300 MPa (188,500 psi). and a tensile modulus (1 percent secant) of about 3,600 MPa (522,100 psi). (ASTM Test Method D638 at about 23 degrees Celsius). The synthesis of such polymers is known in the art. See U.S. Patents in 4,320,224 and 4,331,798.

Microporous PEEK membranes of the present invention are conveniently formed from a solid particulate form of PEEK polymer, such as, e.g., a powder, pellets or other convenient or available PEEK subdivided form. PEEK-type polymer may be obtained from a commercial source such as that sold under the U. S. Registered Trademark VICTREX by ICI Americas, Inc., Wilmington, Delaware, USA. Or, PEEK may be prepared by a condensation polymerization reaction involving as the starting material 4,4′-difluorobenzophenone and hydroquinone, to which is added anhydrous potassium carbonate in a nitrogen atmosphere at temperatures up to 320° C. Detailed instructions appear in U.S. Patent 4,320,224 to Rose et al.

Articles, fibers, and membranes prepared according to the invention are prepared from a solution of PEEK-type polymers in an appropriate high boiling point solvent. Solvents useful for making a solution of dissolved PEEK are organic compounds with some degree of polarity. A large percentage of such organic compounds will have an aromatic or polynuclear aromatic component. The solvents useful in this invention are organic compounds consisting predominantly of carbon and hydrogen and optionally oxygen, nitrogen, sulfur, halogen, and mixtures thereof, wherein the organic compound has a molecular weight of between 160 and 450. Each solvent compound contains at least one six membered ring structure. Each solvent compound possesses a boiling point of between 175° and 420° C, and is capable of dissolving at least 10 weight percent of the poly(etheretherketone)-type polymer present at the membrane forming temperature. The solvent more preferably dissolves at the forming e.g. extrusion or casting temperature, at least 25 weight percent of the PEEK-type polymer, even more preferably 50 weight percent of the PEEK-type polymer.

Preferable solvents useful in this invention include diphenic acid, N,N-diphenylformamide, benzil, anthracene, 1-phenylnaphthalene, 4-bromobiphenyl, 4-bromodiphenyl ether, benzophenone, 1-benzyl-2-pyrrolidinone, o,o′-biphenol, phenanthrene, triphenylmethanol, triphenylmethane, triphenylene, 1,2,3-triphenyl-benzene, diphenylsulfone, 2,5-diphenyloxazole, 2-bi-phenylcarboxylic acid, 4-biphenylcarboxylic acid, m-terphenyl, 4-benzoylbiphenyl, 2-benzoylnaphthalene, 3-phenoxybenzyl alcohol, fluoranthene, 2,5-diphenyl-1,3,4-oxadiazole, 9-fluorenone, 1,2-dibenzoyl benzene, dibenzoylmethane, p-terphenyl, 4-phenylphenol, 4,4′-dibromobiphenyl, n-cyclohexyl-2-pyrrolidone, 2-methoxynaphthalene, p-methoxyphenol, 2-phenylphenol, ethyl-4-hydroxybenzoate, pentafluorophenol, dimethylphthalate, phenylbenzoate, diphenyl phthalate, 2,6-diphenylphenol, phenothiazine, 4,4′-dimethoxybenzophenone, 9,10-diphenyl-anthracene, pentachlorophenol, pyrene, 9,9′-bifluorene, a mixture of terphenyls, for example, Santowax RTM mixed terphenyls (TMtrademark of the Monsanto Company), a mixture of partially hydrogenated terphenyls, for example, Therminol 66TM partially hydrogenated terphenyls (TMtrademark of the Monsanto Company), a mixture of terphenyls and quaterphenyls, for example, Therminol 75TM mixed terphenyls and quaterphenyls (TMtrademark of the Monsanto Company), 1-phenyl-2-pyrrolidinone, 4,4′-isopropyldenediphenol, 4,4′-dihdroxybenzophenone, quaterphenyl, and mixtures thereof. Not all of these solvents are equally effective with all poly(etheretherketone)-type polymers. One of ordinary skill in the art can readily select the best solvent for a specific polymer empirically.

Especially preferred solvents include m-terphenyl, p-terphenyl, a mixture of terphenyls, for example, Santowax RTM mixed terphenyls (TMtrademark of the Monsanto Company), a mixture of partially hydrogenated terphenyls, for example, Therminol 66TM partially hydrogenated terphenyls (TMtrademark of the Monsanto Company), a mixture of terphenyls and quaterphenyls, for example, Therminol 75TM mixed terphenyls and quaterphenyls (TMtrademark of the Monsanto Company), diphenylsulfone, and mixtures thereof.

A solution of a PEEK-type polymer is prepared by warming a mixture of solvent and solid particulate PEEK while stirring the mixture. The solvent and solid particulate or subdivided PEEK are warmed together to an elevated temperature in the range of 175° to 390° C, whereupon, with stirring, the PEEK is dissolved in the solvent. Mixing times necessary to completely dissolve PEEK solids vary with the high boiling point polar organic solvent chosen, the size of the solid PEEK particles, and the temperature of the mixture. As a solid particulate PEEK decreases in size from chunks to powder, mixing times necessary to complete dissolution decrease. Minimum effective mixing temperatures for the high boiling point polar organic

solvents are temperatures at which such solvents are liquid. Maximum effective mixing temperatures are the boiling points of the solvent or solvent mixture chosen. The weight ratio of solvent to PEEK, on a weight-to-weight basis, may vary from 95:5 to 5:95. Ratios of polar organic solvent to PEEK from 50:50 to 90:10 are preferred, with ratios from 60:40 to 85:15 being most preferred. Mixing times observed over the variable ranges specified vary from 5 minutes to 120 minutes under conditions of moderate agitation.

It is known to prepare microporous polymer membranes from liquid polymer solutions by a phase inversion method. Phase inversion refers to a process of membrane formation whereby polymer solutions form a semi-solid gel phase before the solvent is completely removed from the microporous membrane. The process of forming polymer membranes by phase inversion requires that the polymer selected for the membrane be dissolved in a suitable solvent, preferably at room temperature. In conventional phase inversion, the polymer precipitates from a solution mixture when the polymer solution mixture comes into contact with a coagulation fluid which is miscible with the polymer solvent. The porosity of microporous membranes formed by conventional phase inversion results from precipitation of the polymer from solution upon contact of the polymer solution with the coagulation fluid. The phase inversion method is generally applied to amorphous polymers. The phase inversion method has heretofore not been applied to crystalline polymers such as PEEK. Surprisingly, microporous membranes may nonetheless be prepared from solutions of PEEK in the manner described herein.

Flat sheets of unsupported PEEK membrane may be prepared by casting at room temperature a solution of dissolved PEEK on a smooth supporting surface, such as a glass plate, then stripping the membrane from the glass after it has coagulated. Advantageously, a supported PEEK membrane may be prepared by incorporating a reinforcing medium to provide rigidity and strength into the film or membrane cast. A reinforcing medium may be a web or fabric, such as a non-woven glass fabric or a non-woven polyester fabric, but could also be a ceramic.

The reinforcing material may be incorporated into the film or membrane by casting a solution of dissolved PEEK on the reinforcement which has itself been placed on the smooth supporting structure surface prior to casting a solution of dissolved PEEK. A suitable reinforcing for a PEEK membrane prepared according to this invention will not melt or materially change its properties as a reinforcement as a result of exposure to the elevated temperature of the PEEK solution during the coagulation interval.

Alternately, the solution may be cast in a continuous process by casting the solution onto endless belts or rotating drums. The casting surface may be such that the membrane may thereafter be readily separated from the surface. For example, the membrane may be cast onto a support having a low surface energy, such as silicone, coated glass, Teflon®, or metal, or a surface to which the membrane will not adhere. The solution may also be cast onto the surface of a liquid with which the polymer is substantially immiscible, such as water or mercury. Alternately, the solution may be cast onto a support surface which may thereafter be dissolved away from the finished membrane. The solution may also be cast onto a porous support surface.

In the casting of membrane films from a solution of PEEK in a high boiling point polar organic solvent, an advantageous asymmetric membrane structure results from the casting of dissolved PEEK on a smooth supporting surface, such as glass, to form an unsupported membrane or upon a fibrous support in the preparation of a supported PEEK membrane. The asymmetry is believed to result from a more rapid solvent evaporation at the interface of the PEEK solution and air than occurs at the interface of the PEEK solution and the membrane casting surface, viz., glass. The polymer density is observed to increase at the surface of the membrane at the air-polymer solution interface. The asymmetric character of the membrane advantageously gives a permselective layer at the air-membrane interface or skin. To a large extent the permselective skin layer defines the pore size, filtration and selectivity characteristics of the membrane. Modifications of the conditions under which the solvent evaporates from the membrane are convenient parameters to modify the skin formation, and therefore the filtration properties, semi-permeability, and operating characteristics of the microporous membranes formed.

The morphology of the resulting microporous membrane also appears related to the cooling or coagulation rate of the PEEK solution. At higher cooling rates obtained by blowing air over a membrane film of freshly cast PEEK solution, the membrane demonstrates a lower rate of transmission of water than a membrane slowly cooled in room temperature air. The measured maximum pore size of samples slowly cooled in air is nearly twice as large as more rapidly cooled samples. For example, an air-quenched sample membrane has a pore size retention of 0.091 µm. An identical membrane that is formed by slow cooling in air has a pore retention size of 0.173 µm. These observed pore sizes should not be considered limiting, but rather, as representative. This phenomenon is thought to be a result of the separation of liquid phases of the PEEK solution in the manner of a spinodal decomposition whereby precipitating solvent droplets separate from the PEEK causing the formation of vacuoles containing solvent in a matrix of polymer.

Optionally, following, or instead of, the above-described gaseous cooling and coagulation of the nascent film or fiber of PEEK-type polymer, the polymer article may be quenched, e.g. rapidly cooled, in a liquid environment that is substantially a non-solvent for PEEK-type polymer. The quenching or coagulation of the film or fiber in a liquid environment is useful for modifying skin formation and the asymmetric character of the membrane formed, thereby modifying and controlling the filtration properties, semi-permeability and operating characteristics of the membrane formed.

Immersion or spraying of the coagulation fluid may be a convenient method of contacting the nascent film or fiber with the coagulation fluid. A fluid which has a low affinity for the high boiling point PEEK solvent can cause coagulation by removing heat from the nascent film or fiber. A coagulation fluid demonstrating a low affinity or immiscibility would be more effective when the coagulation fluid temperature is less than the temperature of the nascent film or fiber.

Contact of the nascent film or fiber with coagulation fluid which has a low affinity for, or is immiscible with, the high boiling point PEEK solvent results in the formation of a skin on the surface of the article of PEEK-type polymer in contact with the coagulation fluid. The skin formation is believed to result from thermal effects caused when the nascent film or fiber transfers heat to the cooler coagulation fluid. The newly coagulated article has sufficient structural integrity to allow handling until completion of the solvent removal step.

Contact of the nascent PEEK article with a coagulation fluid which has a high affinity for the high boiling point polar organic solvent results in the formation of a larger number of fine pores in the membrane skin than are formed by a coagulation fluid which has a low affinity for the solvent for PEEK-type polymer. The larger number of fine pores significantly enhances the filtration properties of PEEK membranes, by increasing the flux through the membrane. A coagulation fluid that demonstrates a high affinity for PEEK solvent is highly miscible with the solvent at room temperature and has a low viscosity. These properties permit the high boiling point organic solvent for PEEK to rapidly establish an equilibrium condition with the coagulation fluid. A coagulation fluid having a high affinity for the PEEK solvent may also serve the function of a leaching fluid (discussed below) by removing the PEEK solvent from the membrane formed.

Suitable coagulation liquids having a low affinity for the PEEK solvent include water and a mixture of water and tetraethylene glycol, polyethylene glycols, triethylene glycol, glycerines, polypropylene glycol and other polyglycols. Coagulation liquids having a high affinity for the PEEK solvent include methyl alcohol, ethyl alcohol, n-propyl alcohol, i-propyl alcohol, dimethyl ketone, methylethyl ketone, N-methylpyrrolidinone (NMP), N-cyclohexyl-2-pyrrolidone, dimethyl formamide, dimethylsulfoxide, and dimethylacetamide.

The maximum temperature of the coagulation liquid is that temperature at which the membrane or fiber is not adversely affected and below the boiling point of the coagulation fluid. The temperature is preferably between 0 and 200 degrees Celsius, more preferably between 0 and 100 degrees Celsius. The residence time in the liquid quench zone is preferably less than 120 seconds, more preferably less than 30 seconds.

The high boiling point polymer solvent for PEEK-type polymer may be removed from a film or fiber, after coagulation by evaporation in the case of a volatile solvent. Removal of solvent from PEEK-type polymers may be aided by extraction or leaching with another, preferably more volatile, liquid or "non-solvent" in which the polymer solvent is miscible but in which the PEEK-type polymer is insoluble. As PEEK-type polymers are known to be insoluble in common organic solvents, the high boiling point polar organic solvent for PEEK-type polymers can be leached from the coagulated membrane by a common organic solvent with which the high boiling point polar organic solvent is miscible without affecting the properties of the PEEK-type polymer membranes. Common organic solvents effective to remove the high boiling point polar organic solvent for PEEK-type polymers include, toluene, xylene, $C_{1-5}$ alcohols, $C_{3-8}$ ketones, $C_{2-6}$ sulfones, $C_{2-5}$ halogenated alkenyl, and $C_{1-5}$ halogenated alkyls, methylene chloride, carbon tetra-chloride, 1,1,1,-trichloroethane and trichloroethylene. The solvent leaching step may be accomplished by a single contact extraction of a sufficiently large volume of common organic solvent or by a sequence of several solvent extractions. Adequate membrane immersion times may vary from 5 minutes to 120 minutes, preferably less than 60 minutes. The maximum temperature of the leach bath is that temperature at which the membranes or fibers are not adversely affected. The minimum temperature is that temperature at which solvent and/or non-solvent removal from the fibers occurs at a reasonable rate. The temperature of the leach bath is preferably between 0 and 200 degrees Celsius, more preferably between 0 and 80 degrees Celsius.

Fluids classified as non-solvents for PEEK because they dissolve less than 10 percent of PEEK-type polymer may also be useful for coagulation purposes and as plasticizers in making the films, fibers, and articles of this invention. These non-solvents are organic compounds consisting predominantly of carbon and hydrogen and optionally oxygen, phosphorus, silicon, nitrogen, sulfur, halogen, and mixtures thereof,

wherein the organic compound has a molecular weight of between 120 and 455, possesses a boiling point of between 240 and 480 °C, and dissolves less than 10 weight percent of the poly(etheretherketone)-type polymer present at the extrusion temperature. The non-solvents more preferably have a boiling point of between 300 and 480 degrees Celsius, even more preferably between 350 and 480 °C, most preferably between 400 and 480 °C. The non-solvents preferably are soluble in the solvent for PEEK type-polymer used at elevated temperatures.

Preferable non-solvents useful in this invention include 1,3,5-triphenylbenzene, tetraphenylmethane, tetraphenylsilane, diphenylsulfoxide, 1,1-diphenyl-acetone, 1,3-diphenylacetone, 4-acetylbiphenyl, 4,4′-diphenyl benzophenone, 1-benzoyl-4-piperidone, diphenyl carbonate, bibenzyl, diphenylmethylphosphate, 1-bromonapthalene, 2-phenoxybiphenyl, triphenylphosphate, cyclohexylphenylketone, 1,4-dibenzoylbutane, 2,4,6-trichlorophenol, mineral oil, paraffin oil, petroleum oil, for example, Mobiltherm 600™ heat transfer oil, Mobiltherm 603™ heat transfer oil, Mobiltherm 605™ heat transfer oil (™all trademarks of Mobil Corporation, 150 East 42 Street, New York, New York, 10017 USA), butyl stearate, 9-phenyl-anthracene, 2-phenylphenol, 1-ethoxynaphthalene, phenyl benzoate, 1-phenyldecane, 1-methoxynaphthalene, 2-methoxynaphthalene, 1,3-diphenoxybenzene, 1,8-dichloroanthraquinone, 9, 10-dichloroanthracene, polyphosphoric acid, 1-chloronaphthalene, diphenyl ether, 1-cyclohexyl-2-pyrrolidinone, hydrogenated terphenyl, for example, HB-40™ hydrogenated terphenyl (™trademark of the Monsanto Company), dioctyl phthalate, 5-chloro-2-benzoxazolone, dibenzothiophene, diphenyl sulfide, diphenyl chlorophosphate, fluorene, sulfolane, methyl myristate, methyl stearate, hexadecane, dimethyl phthalate, tetraethylene glycol dimethyl ether, diethylene glycol dibutyl ether, docosane, eicosane, dotriacontane, 2,7-dimethoxynaphthalene, 2,6-dimethoxy-naphthalene, o-terphenyl, 1,1-diphenylethylene, epsilon-caprolactam, thianthrene, silicone oil, for example, DC-704™ silicone oil and DC-710™ silicone oil (™trademarks of Dow-Corning Corporation, Midland, Michigan, 48640 USA), and mixtures thereof.

Most preferred non-solvents include 1,3,5-triphenylbenzene, tetraphenylmethane, tetraphenylsilane, 9-phenylanthracene, dotriacontane, and mixtures thereof.

Certain compounds may function as both solvents and non-solvents or coagulation fluids according to the description of the terms set forth. A compound may serve apparently opposite functions in the practice of this invention depending on the solubility of the polymer in the compound selected at the coagulation temperature. As the temperature of the coagulation fluid is lowered the choice of possible coagulation fluids increases. At room temperature, any listed compound, or mixture of listed compounds, which is in a liquid state is suitable as a coagulation fluid. Such compounds include 2-methoxy-naphthalene, dimethylphthalate, and N-cyclohexyl-2-pyrrolidone.

The high boiling point polar organic solvents for dissolving PEEK, disclosed herein, make possible the manufacture of solid and hollow fibers of PEEK by extrusion of a solution of PEEK dissolved in a high boiling point polar organic solvent. Appropriate solvent selection and appropriate non-solvent or coagulation fluid selection may impact the morphology of the hollow fiber membrane extruded, particularly the pore structure. For use in fiber reinforced composites, the fibers may possess either a non-interconnecting or an interconnecting porous structure. For use as liquid separation membranes or as supports for liquid or gas separation membranes, the fibers preferably possess an interconnecting porous structure. In a non-interconnecting porous structure, the pores within the membrane are not completely interconnected so that the pores do not directly connect one side of the membrane with the other side of the membrane, although fluid flow through the membrane may still be accomplished by solution-diffusion transport of the fluid through the dense polymer regions of the membrane. In an interconnecting porous structure, the pores are completely interconnected so that the pores directly connect one side of the membrane with the other side of the membrane so that fluid flow through the membrane may be accomplished primarily by transport through the membrane's pores.

Fibers prepared from solutions of PEEK-type polymer by known methods may be drawn down using conventional motorized winding equipment to the appropriate size. Drawing may occur before, during, or after leaching. The draw temperature is dependent upon whether the membrane contains plasticizer at the time of drawing. For substantially plasticizer free membranes, the membranes are drawn at a temperature which is above the glass transition temperature and below the crystalline melting point of the poly(etheretherketone)-type polymer. The minimum temperature at which the membranes are drawn is preferably at least 140 °C, more preferably at least 150 °C. The maximum temperature at which the membranes are drawn is preferably less than 360 °C, more preferably less than 330 °C. For membranes containing plasticizer, the membrane is drawn at a temperature between ambient temperature and the melting point of the poly(etheretherketone)-type polymer or the depressed melting point of the poly(etheretherketone)-type polymer and plasticizer mixture. Preferred lower draw temperatures are 25 °C or above; preferred upper draw temperatures are less than 10 °C below the depressed melting point or lower.

The membranes are drawn by stretching the membranes under tension. The membranes are drawn to a ratio of between 1.1 to 10. The draw ratio refers to the ratio of the original length of the membrane before drawing to the final length of the membrane after drawing. The degree of draw may also be expressed as percent elongation, which equals $(L_f-L_i)/L_i$ X100, wherein $L_f$ is the final length of the membrane after drawing and $L_i$ is the initial length of the membrane before drawing.

Line speeds for drawing are not critical and may vary significantly. Typical line speeds range from 9 m/min (30 feet per minute) to 90 m/min (300 feet per minute). In the case of hollow fibers used in membrane applications, the fibers preferably possess an outside diameter of from 50 to 3,000 micrometers, more preferably of from 80 to 2,000 micrometers, with a wall thickness of preferably from 10 to 400 micrometers, more preferably from 20 to 400 micrometers. In the case of fibers used in fiber reinforced composites, the fibers preferably possess an outer diameter of from 5 to 100 micrometers, more preferably from 5 to about 50 micrometers; optionally the fibers may be hollow with a wall thickness preferably from 2 to 45 micrometers, more preferably from 2 to 20 micrometers.

Following leaching, the fibers are dried. Prior to drying, the leach liquid remaining in the fibers may optionally be exchanged with a more volatile, non-polar drying agent which possesses a low surface tension and is a solvent for the leach liquid but a non-solvent for the polymer, in order to reduce the possibility of pore collapse during drying. Preferred drying agents include Freon 113TM chlorofluorocarbon (TMtrademark of E.I. duPont de Nemours, Wilmington, Delware, 19898 USA). The exchange may be carried out at temperatures which do not adversely affect the membrane, preferably 0 to 45 degrees Celsius. The fibers may be dried in air or an inert gas such as nitrogen. Drying may also be done under reduced pressures. The fibers may be dried at temperatures at which drying takes place at a reasonable rate and which do not adversely affect the membrane. The drying temperature is preferably between 0 and 140 degrees Celsius, more 10 to 80 degrees Celsius. The drying time is preferably less than 24 hours, more preferably less than 6 hours. Preferably, the drying time is at least 30 seconds, more preferably at least 60 seconds.

The microporous fibers of this invention may be characterized by their porosity and pore size. Porosity refers to the volumetric void volume of the fibers. Porosity is defined as 100 X $[1-(d_f/d_{peek})]$ where $d_f$ is the density of the final leached fiber and $d_{peek}$ is the density of the PEEK-type polymer. The fibers of this invention which possess non-interconnecting pores preferably have a porosity of between 10 and 90 percent, more preferably between 20 and 80 percent. Fibers of this invention which possess interconnecting pores preferably have a porosity of between 20 and 70 percent, more preferably between 30 and 65 percent. Pore size may be estimated by several techniques, including by scanning electron microscopy and/or measurements of bubble point, solvent flux, and molecular weight cutoff. Such techniques are well known in the art for characterizing the pore size of microporous membranes, see Robert Kesting, Synthetic Polymeric Membranes , 2nd edition, John Wiley & Sons, New York, 1985, pp. 46-56; Channing R. Robertson (Stanford University), Molecular and Macromolecular Sieving by Asymmetric Ultrafiltration Membranes , OWRT Report, NTIS No. PB85-1577661EAR, September 1984; and ASTM Test Method F316-86.

In a preferred embodiment of this invention, the process produces microporous hollow fiber membranes having interconnecting pores. Such membranes are useful in the treatment of liquids by the membrane separation processes of microfiltration, ultrafiltration, pervaporation, and membrane distillation. Such hollow fibers may also be used as porous supports for composite gas or liquid separation membranes. In an especially preferred embodiment, the process produces microporous hollow fiber membranes useful for ultrafiltration, microfiltration. Ultrafiltration and microfiltration are pressure driven filtration processes using microporous membranes in which particles or solutes are separated from solutions. Separation is achieved on the basis of differences in particle size or molecular weight.

Porosity refers to the volumetric void volume of the membrane. Porosity may be determined gravimetrically from the density of the void-free polymer and from the differences between the wet and dry weights of the membrane. The membranes must possess porosities permitting sufficient flux through the membrane while retaining sufficient mechanical strength under use conditions. The membranes of this invention preferably have a porosity of at least 10 percent, more preferably at least 15 percent; the membranes of this invention preferably have a porosity of less than 90 percent, more preferably of less than 20 percent.

Pore size of the membrane may be estimated by several techniques including scanning electron microscopy, and/or measurements of bubble point, gas flux, water flux, and molecular weight cut off. The pore size of any given membrane is distributed over a range of pore sizes, which may be narrow or broad.

The bubble point pressure of a membrane is measured by mounting the membrane in a pressure cell with liquid in the pores of the membrane. The pressure of the cell is gradually increased until air bubbles permeate the membrane. Because larger pores become permeable at lower pressures, the first appearance

of bubbles is indicative of the maximum pore size of the membrane. If the number of pores which are permeable to air increases substantially with a small increase in pressure, a narrow pore size distribution is indicated. If the number of air-permeable pores increases gradually with increasing pressure, a broad pore size distribution is indicated. The relationship between pore size and bubble point pressure can be calculated from the equation

$r = \frac{2G}{P}$

wherein r is the pore radius,
G is the surface tension (water/air), and
P is the pressure.

The membranes of this invention useful for ultrafiltration preferably exhibit a bubble point with denatured alcohol of at least 34.5 kPa (5 psi).

The mean pore size of the membranes of this invention useful for ultrafiltration is preferably between 5 and 1000 Angstroms, more preferably between 10 and 500 Angstroms; the maximum pore size of such membranes is preferably less than 1000 Angstroms, more preferably less than 800 Angstroms. The mean pore size of the membranes of this invention useful for microfiltration is preferably between 0.02 and 10 micrometers, more preferably between 0.05 and 5 micrometers; the maximum pore size of such membranes is preferably less than 10 micrometers, more preferably less than 8 micrometers.

Gas flux is defined as

$$F = \frac{\text{(amount of gas passing through the membrane)}}{\text{(membrane area)(time)(driving force across the membrane)}}.$$

A standard gas flux unit is

$$\frac{(\text{centimeter})^3(\text{STP})}{(\text{centimeter})^2(\text{second})(\text{centimeter Hg})},$$

abbreviated hereinafter as

$$\frac{cm^3(STP)}{cm^2\ sec\ cmHg}$$

where STP stands for standard temperature and pressure.

The membranes of this invention preferably have a gas flux for nitrogen of at least

$$10^{-6}\ \frac{cm^3(STP)}{cm^2\ sec\ cmHg},$$

more preferably of at least

$$10^{-5}\ \frac{cm^3(STP)}{cm^2\ sec\ cmHg}.$$

Water flux is defined as

$$W = \frac{\text{(amount of water passing through the membrane)}}{\text{(membrane area)(time)}}$$

under given conditions of temperature and pressure.

The membranes of this invention preferably exhibit a water flux of at least

$$\frac{1\ \text{ml}}{\text{m}^2\ \text{hr cmHg}}.$$

The separation process should be carried out at pressures which do not adversely affect the membrane, that is, pressures which do not cause the membrane to mechanically fail. The pressure differential across the membrane is dependent upon the membrane characteristics, including pore size and porosity. For the membranes of this invention, the pressure differential across the membrane is preferably between 34.5 kPa and 3450 kPa (5 and 500 psig), more preferably between 69 mPa and 2070 kPa (10 and 300 psig). The separation process should be carried out at temperatures which do not adversely affect membrane integrity. Under continuous operation, the operating temperature is preferably between 0 and 350 °C, more preferably between 15 and 300 °C, even more preferably between 20 and 250 °C.

Additional factors beyond the selection of solvent for PEEK-type polymers which affect the formation of interconnecting versus non-interconnecting pores include the polymer concentration in the extrusion blend, volatility of the solvent, cooling rate of the nascent fiber, and composition of non-solvent in the extrusion blend. The formation of fibers with non-interconnecting pores preferably uses an extrusion blend containing polymer and solvent. The formation of fibers with interconnecting pores preferably uses an extrusion blend containing polymer, solvent and non-solvent.

The concentrations of the components in the mixture may vary and are dependent upon the desired membrane characteristics, such as porosity and pore size, and the fabrication method. The concentration of PEEK-type polymer in the mixture is that which results in a mixture with a suitable viscosity for extrusion or casting at the membrane fabrication temperature. The viscosity of the mixture must not be so high that the fluid is too viscous to fabricate; the viscosity must not be too low such that the membrane lacks physical integrity. Extrusion mixtures of PEEK-type polymers and plasticizers generally possess non-Newtonian viscosity behavior; therefore, such mixtures exhibit a shear rate dependence upon viscosity. The mixture preferably has a viscosity at extrusion temperatures of between 100 and 10,000 poise at a shear rate of from 10 to 10,000 sec-1, more preferably between 200 and 1,000 poise at a shear rate of from 50 to 1,000 sec-1. The concentration of PEEK-type polymer in the mixture is preferably from 10 to 80 weight percent, more preferably from 15 to 40 weight percent.

The membranes of this invention may be prepared by solution casting or extrusion. In the solution casting process, as described above, the polymer is contacted with at least one solvent and optionally at least one non-solvent such as a compound useful as a coagulation fluid which is miscible with the solvent for the polymer at elevated temperatures. The elevated temperature at which the mixture is contacted is that temperature at which the mixture is a homogeneous fluid, and below that temperature at which the polymer degrades and below that temperature at which the plasticizer comprising solvent and optional non-solvent boils. The upper temperature limit is preferably below 300 °C, more preferably below 250 °C. The minimum temperature limit is preferably at least 25 °C. The contacting takes place with adequate mixing or agitation to ensure a homogeneous solution.

In the extrusion forming process, the components of an extrusion mixture comprising PEEK-type polymer, high boiling point polar solvent and optional non-solvent may be combined prior to extrusion by mixing in any convenient manner with conventional mixing equipment, as for example, in a Hobart mixer. The extrusion blend may also be combined and mixed under heating in a resin kettle. Alternatively, the extrusion composition may be homogenized by extruding the mixture through a twin screw extruder, cooling the extrudate, and grinding or pelletizing the extrudate to a particle size readily fed to a single or twin screw extruder. Alternatively, the components of the extrusion composition may be combined directly in a melt-pot or twin screw extruder and extruded into membranes in a single step. The use of static mixers helps to

ensure mixture homogeneity. The mixture is heated to a temperature which results in a homogeneous fluid possessing a viscosity suitable for extrusion. The temperature should not be so high or the exposure time so long as to cause significant degradation of the PEEK-type polymer and/or plasticizer. The temperature should not be so low as to render the fluid too viscous to extrude. The extrusion temperature is preferably between 150 and 400 °C, more preferably between 210 and 380 °C.

Hollow fibers are prepared by injecting a fluid into the bore of the nascent hollow fiber through an additional hole in the orifice to prevent collapse of the fiber lumen. The injection fluid may be a gas or a liquid. The injection of core fluid may be a gas such as nitrogen, air, carbon dioxide, or other inert gas or a liquid which is a non-solvent for the PEEK-type polymer such as dioctyl phthalate, methyl stearate, polyglycol, mineral oil, paraffin oil, petroleum oil, for example, Mobiltherm™ 600, 603, and 605 heat transfer oils (™trademarks of Mobil Oil Corporation), and silicone oil, for example, DC-704™ and DC-710™ silicone oil (™trademarks of Dow Corning Corporation). In about the same manner as for film membranes, the membrane operating characteristics, the degree of asymmetry, skin pore size, and physical properties and morphology of the hollow fiber membranes may be influenced by the choice of high boiling point solvent, choice of optional non-solvent in the extrusion blend, rate of membrane cooling, choice of coagulation fluid, rate of solvent extraction, and a choice of organic solvent for extraction of high boiling point polar organic solvent. The asymmetric characteristics of a hollow fiber membrane may be reversed by exchanging the bore fluid for the coagulation bath.

Fibers are most conveniently extruded into a coagulation bath to rapidly provide handling strength to the nascent fiber which is not required of sheet film or sheet membranes cast on a smooth surface. From hollow fibers of PEEK there may be formed asymmetric microporous hollow fiber membranes of PEEK.

Following, or instead of the gaseous quench, the fibers may optionally be quenched in a liquid environment of a coagulation fluid which is substantially a non-solvent for PEEK-type polymer, but which has an affinity for the high boiling point polar organic solvent for PEEK. The porosity, and hence the membrane properties of the resulting PEEK microporous membrane, may be influenced by the relative affinity of the coagulation fluid for the high boiling point polar organic solvent.

At the temperatures at which PEEK film, fiber and membranes are prepared according the method of this invention, the vapor pressure of the high boiling point polar organic solvent at the temperature of film, fiber, or membrane casting or spinning may result in a significant solvent loss to the atmosphere. The practitioner may influence the membrane morphology and properties by control of the rate of solvent evaporation. Useful methods of controlling the rate of solvent loss from a nascent membrane include addition of an organic non-solvent having a boiling point higher than the solvent for PEEK or a PEEK oligomer in the casting solution as a means to reduce the vapor pressure of the high boiling point organic solvent and thereby minimize solvent loss during formation of the hollow fiber PEEK membrane.

Other steps useful to control loss from the PEEK solution after it is formed into the configuration of the membrane include shielding the membrane from convective air flow, or immersion of the configured film, fiber or membrane into a coagulation fluid having a low affinity for the high boiling point organic solvent for PEEK until coagulation is substantially complete. A further measure convenient in the preparation of hollow fiber membranes of PEEK to limit solvent loss is to minimize the air gap between the extruder and the coagulation bath and, correspondingly, the time of exposure of formed PEEK solution. The practical methods of controlling PEEK solvent evaporation described for hollow fiber membranes are useful also for solid fibers and flat sheet PEEK membrane formation.

The foregoing invention is illustrated by the following examples. All percentages are by weight unless otherwise specifically stated.

PEEK-type polymer for the examples of the instant invention is available from ICI America, Inc. The molecular weight provided by the manufacturer for grade 150G is 7,000, for grade 380G was is 13,000, and for grade 450P is 18,000. A weight-average molecular weight determination from measurements of intrinsic viscosities of samples dissolved in sulfuric acid using a Mark-Houwink relation (K = 0.000745, a = 0.65) established from the data in Bishop, M. T., Russo, P.S., Langley, K.H., Macromolecules, 18, 86, 2786 (1985), and including a correction to account for the changes in molecular weights resulting from sulfonation of the PEEK samples in sulfuric acid. A weight-average molecular weight for a sample of: grade 150G PEEK is 20,700, for grade 380G is 32,200 and for grade 450P is 39,200. Reference herein to molecular weight relates to the weight-average molecular weights.

Example 1

In each of a series of runs, 0.5 gram (g) portions of PEEK, available at Imperical Chemical Industries,

Wilmington, Delaware, and sold under the registered trademark VICTREX® 380 P powder, is mixed with 4 to 7 cc of a high temperature solvent in a glass bottle. For those solvents listed which are solid at room temperature, 0.5 g PEEK is mixed with 2 g to 6 g of the solvent. The glass bottle is heated on a Sybron™ Nuova-II electric hot plate set to maintain a surface temperature as determined by a thermocouple of about 300 °C for approximately 30 minutes to dissolve PEEK. Upon dissolution, the resulting solution is a homogeneous clear liquid, beige or brownish-yellow in color. Upon being permitted to cool to room temperature, the solution solidifies without an apparent or visible phase separation. Solvents employed in the preparation of PEEK solutions in Example 1 include:

| Compound | Boiling Point °C |
|---|---|
| Benzophenone | 305 |
| α-Chloronaphthalene | 259 |
| Diphenylsulfone | 379 |
| 2-Phenylphenol | 282 |
| p-Methoxynaphthalene | 274 |
| Ethyl-4-hydroxybenzoate | 297 |
| n-Cyclohexyl-2-pyrrolidone | 305 |
| Pentafluorophenol | 178 |
| Dimethylphthalate | 284 |
| Phenylbenzoate | 298 |

Example 2(a)

A sample of PEEK (VICTREX® 380 P) and benzophenone are mixed together in a 30 m glass bottle at a weight-to-weight ratio of 1:6 PEEK to benzophenone. The bottle is heated on a hot plate having a surface temperature of about 300 °C about 30 minutes until a homogeneous liquid solution forms. The preparation solution is cast on a glass slide 5 cm x 7.5 cm, pre-warmed on a hot plate to a temperature of 100 ° to 150 °C. The nascent PEEK membrane film is then rapidly cooled by an air blower to room temperature.

After cooling, the membrane sample is peeled from the glass slide with a razor blade and immersed in methanol for 1 hour to leach out the benzophenone. The sample appears white in color and opaque to light transmission in methanol. The sample is then rinsed in water and air dried for 3 hours.

Examination of a sample of the membrane under a scanning electron microscope reveals a high degree of asymmetry and the presence of a skin on the surface exposed to air while cooling. Pores with a diameter of 0.1 to 0.3 µm are visible in a scanning electron micrograph of the skin. The membrane surface in contact with the glass slide during cooling shows pores of a size from 1 to 4 µm.

Figure 1A is a scanning electron microscope photograph of the surface exposed to air of a PEEK membrane prepared according to Example 2(a) which shows pores formed on the skin.

Figure 1B is a scanning electron microscope photograph of the surface in contact with the glass plate of a PEEK membrane prepared according to Example 2(a).

Example 2(b)

A sample of the membrane formed as in Example 2(a) having a thickness of 90 µm (3.6 mil) is fixed in an Amicon Model 8010 filtration cell of a size of 10 ml. At a pressure of 138 kPa (20 psig), the flux rate for water is 0.12 ml/$cm^2$-min-atm.

Example 2(c)

A membrane prepared as in Example 2(a) is placed in the test cell. At a pressure of 138 kPa, an aqueous solution of a polystyrene latex solution of 15 percent by weight latex of a particle size 0.091 µm is retained by the membrane.

Example 3(a)

A sample of PEEK dissolved in benzophenone is cast on a glass slide as in Example 2(a), except that after casting the solution, the slide and nascent PEEK membrane are cooled slowly. The hot plate is turned off as the PEEK solution is cast on the glass slide. The hot plate is shielded to limit air convection and thereby limit the rate of solvent evaporation. The hot plate and slide are cooled from 100° to 150° C to room temperature by ambient air. Examination of a sample of the membrane thus formed under a scanning electron microscope reveals asymmetry but to a lesser degree than is observed in the rapidly cooled samples for Example 2(a). A porous network formation is seen on the surface exposed to air. Pores visible in the skin have a diameter of about 1 µm.

Figure 2A is a scanning electron microscope photograph of the surface exposed to air of a PEEK membrane prepared according to Example 3(a).

The examination of the surface of the membrane in contact with the glass shows pores having a diameter of 1 µm into 4 µm.

Figure 2B is a scanning electron microscope photograph of the surface in contact with the glass of a PEEK membrane prepared according to Example 3(a).

Example 3(b)

A sample of membrane formed as in Example 3(a) having a thickness of 100 µm (4 mil) is placed in the test cell. At a pressure of 138 kPa the flux rate for water is 0.04 ml/cm$^2$-min-atm.

Example 3(c)

A membrane as in Example 3(a) is placed in the test cell. At a pressure of 138 kPa the membrane retains an aqueous solution of 15 percent by weight polystyrene latex of a particle size 0.173 µm.

Table 1 illustrates the influence of cooling conditions on membrane properties.

| Example No. | Preparation Condition | Membrane Thickness µm | Flux Rate ml/cm$^2$-min-atm | Retention Size µm |
|---|---|---|---|---|
| 3 | Slow cool | 100 | 0.04 | 0.173 |
| 2 | rapid cool | 90 | 0.12 | 0.091 |

The transport characteristics of the membranes demonstrate that the more symmetric pore structure formed in the slow cool sample results in a slower rate of water transmission, in spite of a larger pore size. The flow rate for slowly cooled membranes is speculated to result from clogging or internal fouling as a result of the more symmetric structure than appears in the rapid cool Example 2.

Example 4

A membrane is formed from a solution of 0.5 gram of PEEK, VICTREX® 380 P, and 8 ml of α-chloronaphthalene according to the method of Example 2(a), except the bottle is heated on a hot plate to dissolve PEEK to a resulting homogeneous liquid solution. The liquid PEEK solution is cast on a room temperature glass slide. The PEEK is allowed to air cool to room temperature. The glass slide with the nascent membrane attached is immersed in acetone for 1 hour to leach out the α-chloronaphthalene. The membrane appears white and opaque. After acetone leaching, the membrane is dried in a vacuum oven for 3 hours and peeled off the glass slide with tweezers. A uniform symmetric microporous structure is observed under the scanning electron microscope. The surface pore size is from 0.1 to 0.3 µm.

Figure 3 is a scanning electron microscope photograph of the surface exposed to air of a PEEK membrane prepared according to Example 4.

Example 5(a)

A membrane is formed from a solution of 0.4 gram of PEEK, VICTREX® 380 P, and in 4 g 2,2-phenylphenol powder according to Example 4. A number of membranes are prepared in the manner of Example 3. A uniform symmetric microporous structure is observed under the scanning electron microscope. The surface pore size is about 3 µm.

Example 5(b)

A membrane as in Example 5(a) is placed in the test cell. At a pressure of 138 kP the membrane retains an aqueous solution of 15 percent by weight polystyrene latex of a particle size 0.173 µm. The membrane passes an aqueous solution of 15 percent by weight polystyrene latex of a particle size 0.091 µm.

Example 6(a)

A solution of 21 grams of PEEK, VICTREX® 450 P powder, 33 g of diphenylsulfone and 6 g of POLYGLYCOL® E1000 (trademark of The Dow Chemical Company), a polyethylene glycol having an average molecular weight of about 1,000, is prepared as in Example 4, except the mixture is heated to 375° C in a PYREX® beaker covered with a metal foil to minimize solvent loss. The mixture is then stirred with a stirring rod for 10 minutes. The beaker is thereafter quenched in an ice water slurry to solidify the blend of polymer and solvent. The polymer/solvent blend is removed from the beaker and dried in a vacuum. The resultant solid is crushed and ground into granules for fiber spinning.

Hollow fibers are spun from the granules using a conventional ram extrusion process. The extruder consists of a barrel and a single tow hollow fiber spinnerette. Both the barrel and the spinnerette are preheated to about 285° to 290° C. 25 Grams of PEEK granules are fed into the barrel, heated for 5 minutes and rammed by the plunger through the spinnerette to provide an extrusion factor (nominal extrudate velocity at the die face, divided by the velocity of the plunger in the barrel) of 120. Nitrogen is injected as a core gas into the hollow PEEK fiber at a flow rate in a range of 20 to 200 cc/minute. The molten PEEK fiber is immersed within 0.63 cm after emerging from the spinnerette into a container of N-methylpyrrolidone (NMP) coagulation liquid maintained at a temperature of about 0° C to 5° C. The collected fiber is subsequently transferred to an acetone bath for further leaching and rinsing, subsequently washed in water and air dried. The resulting fiber has an outside diameter of 700 µm and an inside diameter of 420 µm.

Scanning electron microscope examination shows the presence of pores on the outer skin having a size of 5 to 10 µm. Scanning electron microscope examination shows the presence of pores on the lumen surface having a size of from 0.2 µm to 1 µm.

Example 6(b)

A sample of hollow fiber microporous membrane formed according to Example 6(a) is tested for water flux. A water flow rate of from 2.1 liters/m$^2$-day (2.5 to 6.1 gfd) under pressure of about 345 kP (50 psig) (4.1 X 10$^{-4}$ to 10$^{-3}$ ml/m$^2$-hr-cmHg) is observed.

Example 6(c)

A sample of membrane formed as in Example 6(a) retains a 0.3 percent aqueous solution of polystyrene latex having a partiole size of 0.091 µm under pressure of about 345 kP (50 psig).

A membrane prepared according to Example 6(a) thus demonstrates suitability for microfiltration applications.

Example 7

A hollow fiber is formed from a homogeneous solution of 21 grams of PEEK, Victrex 450 P powder and 39 g of diphenylsulfone according to Example 6(a), except that tetraethylene glycol replaces NMP as the

coagulation liquid.

The membrane fiber wall is asymmetric and has a wall thickness of 140 µm and a lumen diameter of 420 µm. About 60 percent of the weight of the quenched nascent hollow fiber is lost through the acetone leaching step. Scanning electron microscope examination shows pores on the lumen surface having a size of from 0.5 to 2 µm. SEM examination shows the fiber walls to be asymmetric with a skin layer of about 0.8 µm thick and a microporous sublayer.

Example 8--Solvents and Non-solvents for Polyetheretherketone (PEEK)

PEEK, designated as Grade 150P, is obtained from ICI Americas, Inc., Wilmington, Delaware, USA. The PEEK is dried at 150 degrees Celsius for 16 hours in an air-circulating oven and is stored in a desiccator over a drying agent. One hundred seven organic compounds are evaluated for their solvent effect on PEEK. Most of the organic compounds may be obtained from Aldrich Chemical Co. Inc., 940 West St. Paul Avenue, Milwaukee, Wisconsin, 53233 USA and used as received. Other organic chemicals may be obtained from suppliers as listed in Chemical Sources , published annually by Directories Publishing Co., Inc., of Columbia, South Carolina, USA.

Mixtures of PEEK and solvent, a total weight of less than about 2 grams, are prepared by weighing PEEK and solvent to a precision of ±0.001 gram in a 1 to 4 dram size glass vial. The resulting air space in each vial, which varies considerably due to the large differences in the bulk densities of the compounds, is purged with nitrogen. The vials are sealed with screw caps containing aluminum foil liners. Solubility is usually determined at about 10 weight percent polymer, followed by additional determinations at about 25 and 50 weight percent if necessary.

In the following tables, in the solubility column, "g" is greater than (>), and "s" is smaller or less than (<), and = is equal to.

Table 2 below lists the solvent effect of 107 organic compounds on PEEK. The approximate solubility of each polymer-organic compound mixture is shown at the indicated temperature(s). Compounds are assigned a number (beginning with 200) for easy reference. Also listed in Table 2 is an approximate molecular weight, melting point, and boiling point of each organic compound, if these physical properties are available.

Figure 4 shows a composite of temperature at ambient pressure at which a specific weight percent of PEEK will dissolve in the solvents m-terphenyl, pyrene, fluoranthene and diphenyl sulfone. Any combination of temperature and polymer concentration above each line represents homogenous, soluble, one phase mixtures. Similarly any combination below each line represents insoluble multiphase mixtures.

| Ref. No. | Compound | Molec. Weight | Melting Point | Boiling Point | Solub. (g= >;s= <) | Temp. (°C) |
|---|---|---|---|---|---|---|
| | | | Approximate | | | |
| 200 | Triphenylmethanol | 260 | 161 | 360 | g 50.1%? | 349 |
| 201 | Triphenylmethane | 244 | 93 | 359 | g 50.2% | 349 |
| 202 | Triphenylene | 228 | 196 | 438 | g 50.0% | 350 |
| 203 | 1,2,3-Triphenylbenzene | 306 | - 158 | - | g 50.1% | 349 |
| 204 | 1,3,5-Triphenylbenzene | 306 | 173 | 460 | s 9.9% | 349 |
| 205 | Tetraphenylmethane | 320 | 281 | 431 | =s 10.7% | 349 |
| 206 | Tetraphenylsilane | 337 | 236 | 422 | s 10.1% | 349 |
| 207 | Diphenyl sulfoxide | 202 | 70 | 350 | s 10.5%a | 349 |
| 208 | Diphenyl sulfone | 218 | 124 | 379 | g 50.0% | 349 |
| 209 | 2,5-Diphenyloxazole | 221 | 72 | 360 | g 50.0% | 349 |
| 210 | Diphenic acid | 242 | 228 | - | g 25.1%?a | 349 |
| 211 | 1,1-Diphenylacetone | 210 | 60 | - | s 10.0% | 302 |
| 212 | 1,3-Diphenylacetone | 210 | 33 | 330 | s 10.1% | 302 |
| 213 | 4-Acetylbiphenyl | 196 | 117 | - | s 10.3% | 302 |
| 214 | 2-Biphenylcarboxylic acid | 198 | 109 | 349 | g 50.1% | 349 |
| 215 | 4-Biphenylcarboxylic acid | 198 | 225 | - | g 10.0% | 349 |
| 215 | 4-Biphenylcarboxylic acid | 198 | 225 | - | =g 50.1%? | 349 |
| 216 | m-Terphenyl | 230 | 83 | 379 | g 50.2% | 349 |
| 216 | m-Terphenyl | 230 | 83 | 379 | s 5.0% | 302 |
| 217 | 4-Benzoylbiphenyl | 258 | 100 | 419 | g 50.1% | 349 |
| 217 | 4-Benzoylbiphenyl | 258 | 100 | 419 | s 5.2% | 302 |
| 218 | 4,4'-Diphenylbenzophenone | 334 | - | - | s 10.4% | 302 |
| 219 | 1-Benzoyl-4-piperidone | 203 | 56 | 399 | g 9.8%?a | 349 |
| 220 | 2-Benzoylnaphthalene | 232 | 81 | 383 | g 49.9% | 349 |
| 221 | Diphenyl carbonate | 214 | 79 | 301 | s 10.1% | 302 |

a = Black or very dark color      b = reacts?

* Monsanto Company

| Ref. No. | Compound | Approximate Molec. Weight | Melting Point | Boiling Point | Solub. (g= >;s= <) | Temp (°C) |
|---|---|---|---|---|---|---|
| 222 | Bibenzyl | 182 | 51 | 284 | s 10.3% | 274 |
| 223 | Diphenyl methyl phosphate | 264 | - | 389 | s 10.0%a | 349 |
| 224 | 1-Bromonaphthalene | 207 | -1 | 280 | s 9.8% | 274 |
| 225 | N,N-Diphenylformamide | 197 | 71 | 337 | g 9.9% | 302 |
| 225 | N,N-Diphenylformamide | 197 | 71 | 337 | s 25.2% | 302 |
| 226 | 3-Phenoxybenzyl alcohol | 200 | - | 329 | g 24.7% | 302 |
| 226 | 3-Phenoxybenzyl alcohol | 200 | - | 329 | s 49.9% | 302 |
| 227 | Fluoranthene | 202 | 108 | 384 | g 50.0% | 349 |
| 228 | 2-Phenoxybiphenyl | 246 | 49 | 342 | s 10.9% | 302 |
| 229 | Triphenyl phosphate | 326 | 51 | 281 | s 9.9% | 274 |
| 230 | Cyclohexyl phenyl ketone | 188 | 56 | - | s 9.9% | 302 |
| 231 | 2,5-Diphenyl-1,3,4-oxadiazole | 222 | 139 | 382 | g 49.9% | 349 |
| 232 | 1,4-Dibenzoylbutane | 266 | 107 | - | s 10.0% | 302 |
| 233 | 9-Fluorenone | 180 | 83 | 342 | g 24.9% | 302 |
| 233 | 9-Fluorenone | 180 | 83 | 342 | s 50.0% | 302 |
| 234 | 1,2-Dibenzoyl benzene | 286 | 146 | - | g 50.2% | 349 |
| 235 | Dibenzoylmethane | 224 | 78 | 360 | g 50.4% | 349 |
| 236 | 2,4,6-Trichlorophenol | 197 | 65 | 246 | s 9.0% | 240 |
| 237 | Benzil | 210 | 94 | 347 | g 10.2% | 302 |
| 237 | Benzil | 210 | 94 | 347 | s 25.0% | 302 |

a = Black or very dark color    b = reacts?
* Monsanto Company

| Ref. No. | Compound | Approximate | | | | |
|---|---|---|---|---|---|---|
| | | Molec. Weight | Melting Point | Boiling Point | Solub. (g=>;s=<) | Temp (°C) |
| 238 | p-Terphenyl | 230 | 212 | 389 | s 9.8% | 302 |
| 238 | p-Terphenyl | 230 | 212 | 389 | g 50.0% | 349 |
| 238 | p-Terphenyl | 230 | 212 | 389 | s 9.8% | 302 |
| 238 | p-Terphenyl | 230 | 212 | 389 | g 50.0% | 349 |
| 239 | Anthracene | 178 | 216 | 340 | g 10.0% | 302 |
| 239 | Anthracene | 178 | 216 | 340 | s 24.7% | 302 |
| 240 | Mineral oil | - | - | 360 | s 10.7% | 349 |
| 241 | Butyl stearate | 341 | - | 343 | s 10.0% | 302 |
| 242 | 9-Phenylanthracene | 254 | 151 | 417 | g 10.4%?a | 349 |
| 243 | 1-Phenylnaphthalene | 204 | - | 324 | g 9.9% | 302 |
| 243 | 1-Phenylnapthalene | 204 | - | 324 | s 25.0% | 302 |
| 244 | 4-Phenylphenol | 170 | 166 | 321 | g 25.8% | 297 |
| 244 | 4-Phenylphenol | 170 | 166 | 321 | s 50.0% | 302 |
| 244 | 4-Phenylphenol | 170 | 166 | 321 | g 50.0% | 304 |
| 245 | 2-Phenylphenol | 170 | 59 | 282 | s 10.2% | 274 |
| 246 | 1-Ethoxynaphthalene | 172 | - | 280 | s 10.2% | 274 |
| 247 | Phenyl benzoate | 198 | 69 | 298 | s 9.8% | 274 |
| 248 | 1-Phenyldecane | 218 | - | 293 | s 10.2% | 274 |
| 249 | 1-Methoxynaphthalene | 158 | - | 269 | s 10.0% | 240 |
| 250 | 2-Methoxynaphthalene | 158 | 74 | 274 | s 9.4% | 240 |
| 252 | 4-Bromobiphenyl | 233 | 86 | 310 | g 5.2% | 300 |
| 252 | 4-Bromobiphenyl | 233 | 86 | 310 | s 24.8% | 302 |
| 252 | 4-Bromobiphenyl | 233 | 86 | 310 | s 5.2% | 241 |

a = Black or very dark color        b = reacts?
* Monsanto Company

| Ref. No. | Compound | | Approximate | | | |
|---|---|---|---|---|---|---|
| | | Molec. Weight | Melting Point | Boiling Point | Solub. (g=>;s=<) | Temp. (°C) |
| 253 | 4-Bromodiphenyl ether | 249 | 18 | 305 | =g 5.4% | 300 |
| 253 | 4-Bromodiphenyl ether | 249 | 18 | 305 | s 24.8% | 302 |
| 253 | 4-Bromodiphenyl ether | 249 | 18 | 305 | s 5.4% | 241 |
| 254 | 1,3-Diphenoxybenzene | 262 | ~60 | - | =s 5.4%a | 300 |
| 254 | 1,3-Diphenoxybenzene | 262 | 60 | - | s 5.4%a | 241 |
| 255 | 1,8-Dichloroanthraquinone | 277 | 202 | - | s 5.3%a | 300 |
| 255 | 1,8-Dichloroanthraquinone | 277 | 202 | - | s 5.3%a | 241 |
| 256 | 9,10-Dichloroanthracene | 247 | 214 | - | s 5.5a% | 300 |
| 257 | 4,4'-Dibromobiphenyl | 312 | 170 | 355 | s 5.2% | 241 |
| 257 | 4,4'-Dibromobiphenyl | 312 | 170 | 355 | g 5.2% | 300 |
| 257 | 4,4'-Dibromobiphenyl | 312 | 170 | 355 | s 25.1% | 302 |
| 257 | 4,4'-Dibromobiphenyl | 312 | 170 | 355 | g 50.1% | 349 |
| 258 | Benzophenone | 182 | 50 | 305 | s 11.3% | 241 |
| 258 | Benzophenone | 182 | 50 | 305 | =g 11.3% | 300 |
| 258 | Benzophenone | 182 | 50 | 305 | s 24.9% | 302 |
| 259 | Polyphosphoric acid | - | - | - | s 4.8%a | 300 |
| 260 | 1-Chloronaphthalene | 162 | -20 | 258 | s 9.9% | 241 |
| 261 | Diphenyl ether | 170 | 27 | 259 | s 10.1% | 241 |
| 262 | 1-Cyclohexyl-2-pyrrolidinone | 167 | - | 302 | =s 10.0%a | 300 |
| 263 | 1-Benzyl-2-pyrrolidinone | 175 | - | - | g 14.9% | 302 |
| 263 | 1-Benzyl-2-pyrrolidinone | 175 | - | - | s 32.9% | 302 |
| 264 | o,o'-Biphenol | 186 | 109 | 315 | s 5.1% | 221 |
| 264 | o,o'-Biphenol | 186 | 109 | 315 | g 9.8% | 302 |
| 264 | o,o'-Biphenol | 186 | 109 | 315 | s 25.0% | 302 |

a = Black or very dark color  b = reacts?

* Monsanto Company

| Ref. No. | Compound | Molec. Weight | Approximate Melting Point | Boiling Point | Solub. (g=>;s=<) | Temp. (°C) |
|---|---|---|---|---|---|---|
| 265 | HB-40 (hydrogenated terphenyl) * | 244 | - | 325 | s 9.9% | 302 |
| 266 | Dioctyl phthalate | 391 | -50 | 384 | s 10.8% | 349 |
| 267 | 5-Chloro-2-benzoxazolone | 170 | 191 | - | s 10.2%a | 349 |
| 268 | Dibenzothiophene | 184 | 98 | 332 | g 10.3%?b? | 302 |
| 269 | Bis(4-chlorophenyl sulfone) | 287 | 146 | 412 | s 15.3% | 349 |
| 270 | Diphenyl phthalate | 318 | 79.5 | - | g 50.0% | 349 |
| 271 | 2,6-Diphenylphenol | 246 | 101 | - | g 50.0% | 349 |
| 272 | Diphenyl sulfide | 186 | -40 | 296 | s 9.0% | 274 |
| 273 | Diphenyl chlorophosphate | 269 | - | 360 | s 9.9% | 349 |
| 274 | Fluorene | 166 | 113 | 298 | s 10.1% | 274 |
| 275 | Phenanthrene | 178 | 100 | 340 | g 10.0% | 302 |
| 275 | Phenanthrene | 178 | 100 | 340 | s 25.0% | 302 |
| 276 | Sulfolane | 120 | 27 | 285 | s 10.1% | 274 |
| 277 | Methyl myristate | 242 | 18 | 323 | s 8.2% | 302 |
| 278 | Methyl stearate | 299 | 38 | 358 | s 10.1% | 349 |
| 279 | Phenothiazine | 199 | 182 | 371 | g 49.9% | 349 |
| 380 | Hexadecane | 226 | 19 | 288 | s 10.0% | 274 |
| 281 | Dimethyl phthalate | 194 | 2 | 282 | s 10.0% | 274 |
| 282 | Tetraethylene glycol dimethyl ether | 222 | -30 | 275 | s 9.6% | 240 |
| 283 | Diethylene glycol dibutyl ether | 218 | -60 | 256 | s 9.6% | 240 |

a = Black or very dark color        b = reacts?
* Monsanto Company

| Ref. No. | Compound | Approximate Molec. Weight | Melting Point | Boiling Point | Solub. (g=>;s=<) | Temp. (°C) |
|---|---|---|---|---|---|---|
| 284 | Docosane | 311 | 44 | 369 | s 10.4% | 349 |
| 285 | Eicosane | 283 | 37 | 340 | s 7.9% | 302 |
| 286 | Dotriacontane | 451 | 70 | 476 | s 10.4% | 349 |
| 287 | 2,7-Dimethoxynaphthalene | 188 | 138 | - | g 10.0%ab | 349 |
| 288 | 2,6-Dimethoxynaphthalene | 188 | 153 | - | g 10.8%b | 349 |
| 289 | o-Terphenyl | 230 | 58 | 337 | s 9.9% | 302 |
| 290 | 4,4'-Dimethoxy-benzophenone | 242 | 142 | - | g 50.0% | 349 |
| 291 | 9,10-Diphenylanthracene | 330 | 246 | - | g 50.0% | 349 |
| 292 | 1,1-Diphenylethylene | 180 | 6 | 270 | s 9.7% | 240 |
| 293 | epsilon-Caprolactam | 113 | 71 | 271 | s 10.0% | 240 |
| 294 | Tetraphenylethylene | 332 | 223 | 420 | s 10.9% | 302 |
| 295 | Pentafluorophenol | 184 | 35 | 143 | s 9.9% | 140 |
| 295 | Pentafluorophenol | 184 | 35 | 143 | g 5.0% | 141 |
| 296 | Thianthrene | 216 | 158 | 365 | s 10.2% | 302 |
| 298 | Pentachlorophenol | 266 | 189 | 310 | g 25.0% | 302 |
| 298 | Pentachlorophenol | 266 | 189 | 310 | s 50.6% | 302 |
| 299 | Pyrene | 202 | 150 | 404 | g 50.0% | 347 |
| 300 | Benzanthrone | 230 | 169 | - | s 25.5%ab | 328 |

a = Black or very dark color    b = reacts?

* Monsanto Company

| Ref. No. | Compound | Molec. Weight | Approximate Melting Point | Boiling Point | Solub. (g=>;s=<) | Temp. (°C) |
|---|---|---|---|---|---|---|
| 301 | 9,9'-Bifluorene | 330 | 247 | - | g 25.2% | 327 |
| 301 | 9,9'-Bifluorene | 330 | 247 | - | s 50.2% | 318 |
| 301 | 9,9'-Bifluorene | 330 | 247 | - | g 50.2% | 327 |
| 302 | Santowax R * Chem Abstr. #26140-60-3 | - | 145 | 364 | g 60.0% | 347 |
| 303 | Therminol 66 * Chem Abstr. #61788-32-7 | 240 | - | 340 | g 50.1% | 337 |
| 304 | Therminol 75 * Chem Abstr. #26140-60-3 Chem Abstr. #217-59-4 | - | 70 | 385 | g 24.9% | 325 |
| 304 | Therminol 75 * | - | 70 | 385 | g 50.3% | 332 |
| 305 | 1-Phenyl-2-pyrrolidinone | 161 | 68 | 345 | g 10.1% | 279 |
| 305 | 1-Phenyl-2-pyrrolidinone | 161 | 68 | 345 | g 25.5% | 290 |
| 305 | 1-Phenyl-2-pyrrolidinone | 161 | 68 | 345 | g 50.0% | 317 |
| 306 | 4,4'-Isopropyl-denediphenol | 228 | 156 | 402 | =g 50.0% | 301 |
| 306 | 4,4'-Isopropyl-denediphenol | 228 | 156 | 402 | g 50.0% | 318 |
| 307 | 4,4'-Didihydroxy-benzo-phenone | 214 | 214 | - | s 10.0% | 301 |
| 307 | 4,4'-Dihydroxy-benzo-phenone | 214 | 214 | - | g 25.0% | 310 |
| 307 | 4,4'-Dihydroxy-benzo-phenone | 214 | 214 | - | s 50.0% | 319 |

a = Black or very dark color    b = reacts?
* Monsanto Company

Example 9--Non-interconnecting Porous PEEK Solid Fibers

A mixture of 41 weight percent PEEK (ICI grade 380) and 59 weight percent m-terphenyl is heated to about 340 degrees Celsius in a resin kettle with stirring under nitrogen purge to form a uniform solution. The blend is poured into a metal tray, cooled, broken into pieces, and ground into particles.

The PEEK/m-terphenyl particles are fed to a 3/4 (1.9 cm) inch Killion extruder and solid (non-hollow) fibers extruded under a temperature profile from about 150 to about 345 degrees Celsius. The fibers are initially quenched in room temperature air for about 1 second, followed by quenching in an ice water bath for about 5 seconds. The m-terphenyl is extracted from the fibers by soaking the fibers in toluene at room temperature for about two days. The fibers are then air dried at room temperature for about two days. The resulting fiber size is about 485 microns.

The weight loss of the extracted fibers is determined by calculating 100 x (preextraction weight -postextraction weight)/preextraction weight to be 55.3 percent.

Examination of the extracted fibers by scanning electron microscopy (SEM) indicates that the fibers possess a porous structure with a thin skin of about 20 microns at the outer surface.

Example 10--Non-interconnecting Porous PEEK Hollow Fibers

A mixture of about 50 weight percent PEEK (ICI grade 450) and 50 weight percent Santowax RTM mixed terphenyls (TMtrademark of Monsanto Company, 800 North Lindberg Boulevard, St. Louis, Missouri, 63166 USA) is heated to about 350 degrees Celsius in a resin kettle with stirring under nitrogen purge to form a uniform solution. The blend is poured into a metal tray, cooled, broken into pieces, and ground into particles. The PEEK/m-terphenyl particles are then extruded through a KOCH Engineering high intensity static mixer and pelletized.

The PEEK/m-terphenyl pellets are fed to a 3/4 inch (1.9 cm) Killion single screw extruder equipped with a hollow fiber spinneret and core gas. The hollow fibers are extruded at about 340 degrees Celsius, quenched in room temperature air for less than 0.5 seconds, followed by quenching for about 1.5 seconds in a water bath at room temperature. The fibers are drawn at a rate of 40 meters/minute and wound onto spools. The Santowax RTM mixed terphenyls are extracted from the fibers by soaking the fibers in toluene overnight under tension. The fibers are allowed to air dry at room temperature for 1 hour. The resulting fiber size is 290 microns inside diameter by 480 microns outside diameter.

The hollow fibers are assembled into cells. The test cell is a pressure vessel with four ports, two tubesheet ports and two shellside ports. Eight fibers are passed into one of the tubesheet ports and out the other allowing for a 14 centimeter length of fibers to be contained within the test device. Epoxy tubesheets are formed in the two tubesheet ports to give a leak-tight bond between the fiber and the two ports.

To test for gas flux, the test cells are pressurized with nitrogen or carbon dioxide at 50 psig (345 kPa) by allowing the compressed gas to enter the test cell through one shellside port while leaving other shellside port closed. The exit port is then opened for a few minutes to purge the vessel of air and then closed with pure nitrogen or carbon dioxide left in the vessel. With the exit port closed and the feed port opened, the gas contained within the test device, by means of a pressure driving force, permeates through the walls of the hollow fibers and passes through the lumen of the fibers and out through the tubesheet ports where the flow rate is measured either by means of bubble or mass flow meters. There is negligible back pressure on the gas exiting the tubesheet. From these flow measurements, the gas flux rate can be calculated by use of the follow equation.

$$\text{Gas Flux} = \frac{\text{Measured flow}}{\text{surface area of fiber (centimeter}^2\text{) x pressure (centimeter Hg) x 60 (seconds/minute)}}.$$

The units are standard cubic centimeter/centimeter$^2$ centimeter Hg second.
Measured flow = standard cubic centimeters/minute.
Surface area of fibers = 3.14 x OD (outside diameter, cm) x length x the number of fibers.
Pressure (centimeter Hg) = psi. x 76 / 14.7.
The fibers exhibit no gas flux under these conditions.

The weight loss of the extracted fibers is determined gravimetrically as described in Example 9 to be about 45 percent. Examination of the extracted fibers by SEM indicates that the fibers possess a porous structure with a thin skin of 2 to 4 micrometers at the outer surface.

Example 11--Non-interconnecting Porous PEEK Hollow Fibers

A mixture of 50 weight percent PEEK (ICI grade 450) and 50 weight percent diphenylsulfone is heated to 350 degrees Celsius in a resin kettle with stirring under nitrogen purge to form a uniform solution. The blend is poured into a metal tray, cooled, broken into pieces, and ground into particles. The PEEK/diphenylsulfone particles are then extruded through a KOCH Engineering high intensity static mixer and pelletized.

The PEEK/diphenylsulfone pellets are fed to a 3/4 inch (1.9 cm) Killion single screw extruder equipped with a hollow fiber spinneret and nitrogen core gas. The hollow fibers are extruded using a temperature profile of from 265 to 315 degrees Celsius, quenched in room temperature air for less than 25 seconds, followed by quenching for 1.5 seconds in a water bath at room temperature. The fibers are drawn at a rate

of 33 meters/minute and wound onto spools. The diphenylsulfone is extracted from the fibers by soaking the fibers in methylene chloride for 1 hour under tension. The fibers are dried under vacuum at room temperature for 2 hours. The resulting fiber size is 217 µm inside diameter by 289 µm outside diameter.

The hollow fibers are assembled into test cells as described in Example 10. The fibers exhibit no gas flux at a feed pressure of 69 kPa (10 psi) and room temperature. No bubbles are observed when conducting the bubble point test as described in Example 12 at a pressure of 34.5 kPa (5 psi). Weight loss upon leaching and drying is 35 percent.

Example 12--Interconnecting Porous PEEK Hollow Fibers

A mixture of 50 weight percent PEEK (ICI grade 450), 42 weight percent 1,3,5-triphenylbenzene, and 8 weight percent m-terphenyl is heated to 330 degrees Celsius in a resin kettle with stirring under nitrogen purge to form a uniform solution. The blend is poured into a metal tray, cooled, broken into pieces, and ground into particles.

The PEEK/1,3,5-triphenylbenzene/m-terphenyl mixture is fed to a 3/4 inch (1.9 cm) Killion single screw extruder equipped with a hollow fiber spinneret and nitrogen core gas. The hollow fibers are extruded at 330 degrees Celsius, quenched in room temperature air for less than 60 seconds, followed by quenching for 1.5 seconds in a water bath at room temperature. The fibers are drawn at a rate of 50 meters/minute and wound onto spools. The triphenylbenzene and m-terphenyl are extracted from the fibers by soaking the fibers in methylene chloride overnight under tension and are dried under vacuum for 1 hour at room temperature. The resulting fiber size is 50 µm inside diameter by 120 µm outside diameter.

The hollow fibers are assembled into cells as described in Example 10.

The gas flux of the fibers is evaluated as described in Example 10. The fibers exhibit a nitrogen flux of 0.16 to 2.1 x $10^{-4}$ $cm^3$ (STP)/($cm^2$ sec cmHg) at a feed pressure of 50 psi (345 KPa) and room temperature. The fibers are then evaluated for water flux by first wetting the pores with methanol and then applying room temperature water pressurized to 40 psi (278 KPa) to the shellside of the test cell and collecting the water which permeates through to the fiber lumen. The water flux is determined to be 1.0 gal/$ft^2$/day (2.05 x $10^{-4}$ml/$m^2$-hr-cmHg). The gas and water flux measurements indicate the fibers possess an interconnecting porous structure.

A bubble point test conducted with methanol in accordance with ASTM Method E128-61 described in 1986 Annual Book of ASTM Standards , Vol. 14.02, 1986, reveals no bubbles at test pressures of 556 kPa (80 psi), indicating that the pore size of the fibers is less than about 0.1 micrometers.

The rejection of various solutes is tested by successively feeding a solution containing a solute to the shellside of the test device at room temperature and a pressure of 345 kPa (50 psi) and analyzing the permeate collected from the fiber lumen to determine the extent of solute rejection. The percent rejection is calculated using the equation 100 X [1 - ($C_p$/$C_f$)] where $C_p$ is the concentration of the solute in the permeate and $C_f$ is the concentration of the solute in the feed. The different solutes used and their nominal molecular weights in daltons are: Blue Dextran 2,000,000, Cytochrome C 12,400, Vitamin B-12 1335 and Methylene Blue 320. The feed concentrations of the solutes in the solutions is approximately in the range of 0.25 grams/liter. The solute rejections are Blue Dextran 99 percent, Cytochrome C 99 percent, Vitamin B-12 95 percent, and Methylene Blue 0 percent, indicating the fibers have a molecular weight cut-off 1335 daltons.

The weight loss of the extracted fibers is determined gravimetrically as described in Example 2 to be 45 to 50 percent.

Example 13--Hollow Fibers Using Core Fluid

A mixture of 40 weight percent PEEK (ICI grade 450), 52 weight percent 1,3,5-triphenylbenzene, and 8 weight percent m-terphenyl is heated to 350 degrees Celsius in a resin kettle with stirring under nitrogen purge to form a uniform solution. The blend is poured into a metal tray, cooled, broken into pieces, and ground into particles.

The PEEK/1,3,5-triphenylbenzene/m-terphenyl particles are fed to a 3/4 inch (1.9 cm) Killion single screw extruder equipped with a hollow fiber spinneret using a core liquid of Mobiltherm 600TM heat transfer oil (TMtrademark of Mobil Oil Corporation). The hollow fibers are extruded at 330 degrees Celsius, quenched in room temperature air for less than 15 seconds, followed by quenching for 1.5 seconds in a water bath at room temperature. The fibers are drawn at a rate of 40 meters/minute and wound onto spools. The 1,3,5-triphenylbenzene and m-terphenyl are extracted from the fibers by soaking the fibers in methylene chloride

overnight under tension. The fibers are allowed to air dry at room temperature for 20 hours. The resulting fiber size is 540 to 740 micrometers in outer diameter with an inner diameter of 360 to 500 micrometers.

The hollow fibers are assembled into cells as described in Example 10.

The gas flux of the fibers is evaluated as described in Example 10. The fibers do not exhibit a nitrogen flux at a feed pressure of 50 psi (340 KPa). and room temperature.

SEM indicates that the fibers possess a thin skin of several micrometers on the inside of the hollow fibers with a porous area on the outside of the fibers.

Example 14 - PEEK Membranes Fabricated Without Drawing

A mixture of 50 weight percent VICTREX® PEEK (Grade 450G) and 50 weight percent diphenylsulfone is extruded into hollow fibers using a spinnerette with a 10 mil (0.25 mm) annulus at a temperature of 320 ° C. The fiber size as extruded is 222 micrometers I.D. with a wall thickness of 34 micrometers. The fibers are leached in methylene chloride under tension at ambient temperature for 1 hour. The fibers are dried under vacuum at ambient temperature for at least 1 hour. Following drying, the fiber size is 217 micrometers I.D. with a wall thickness of 36 micrometers.

Analysis of the fibers shows a weight loss of 35.1 percent during the leaching step, indicating that the majority of diphenylsulfone has been removed from the fibers. Upon testing for gas flux, the gas flux for nitrogen is found to be less than about 1.2 X $10^{-7}$ $cm^3$ (STP)/$cm^2$-sec-cmHg.

Example 15 - PEEK Membranes Fabricated Without Drawing

A mixture of 50 weight percent VICTREX® PEEK and 50 weight percent diphenylsulfone is extruded into hollow fibers using a spinnerette with a 5 mil (0.125 mm) annulus at a temperature of 300 - 315 ° C, with a shear rate in the spinnerette annulus of 925 $sec^{-1}$. The fiber size as extruded is 117 micrometers I.D. with a wall thickness of 26 micrometers.

The fibers are leached in acetone under tension at ambient temperature for 1 hour and then dried under vacuum at ambient temperature for at 2 hours. Following drying, the fiber size is 99 micrometers I.D. with a wall thickness of 25 micrometers.

Analysis of the fibers shows a weight loss of 34.7 percent during the leaching step, resulting in a porosity based on final fiber dimensions of 38.1 percent. Upon testing for gas flux, the gas flux for nitrogen is determined to be less than about 1.0 X $10^{-6}$ $cm^3$ (STP)/$cm^2$-sec-cmHg.

Example 16 - PEEK Membranes Fabricated Without Drawing

A mixture of 50 weight percent VICTREX® PEEK and 50 weight percent diphenylsulfone is extruded into hollow fibers using a spinnerette with a 5 mil (0.125 mm) annulus at a temperature of 260 (spinnerette) - 310 (pack) ° C, with a shear rate in the spinnerette annulus of 925 $sec^{-1}$. The fiber size as extruded is 112 micrometers I.D. with a wall thickness of 29.5 micrometers.

The fibers are leached in acetone under tension at ambient temperature for 1 hour and then dried under vacuum at ambient temperature for 2 hours. Following drying, the fiber size is 85 micrometers I.D. with a wall thickness of 25 micrometers.

Analysis of the fibers shows a weight loss of 34.7 percent during the leaching step, resulting in a porosity based on final fiber dimensions of 26.9 percent. Upon testing for gas flux, the gas flux for nitrogen is determined to be about 0.11 X $10^{-4}$ $cm^3$ (STP)/$cm^2$-sec-cmHg.

Example 17 - PEEK Membranes Fabricated With Drawing During Leach

A mixture of 50 weight percent VICTREX® PEEK and 50 weight percent diphenylsulfone is extruded into hollow fibers using a spinnerette with a 10 mil (0.25 mm) annulus at a temperature of 315 ° C. The fibers are placed in a glycerol bath at 120 ° C for 5 minutes before drawing 73 percent. The fibers are then leached in acetone under tension at ambient temperature for 1 hour and then dried under tension under vacuum at ambient temperature for 2 hours. Following drying, the fiber size is 142 micrometers I.D. with a wall thickness of 22 micrometers.

Upon testing for gas flux, the gas flux for nitrogen is determined to be about 3.1 X $10^{-4}$ $cm^3$ (STP)/$cm^2$-sec-cmHg.

Example 18 - PEEK Membranes Fabricated With Drawing During Leach

A mixture of 50 weight percent VICTREX® PEEK and 50 weight percent diphenylsulfone is extruded into hollow fibers using a spinnerette with a 10 mil (0.25 mm) annulus at a temperature of 315 °C, with a shear rate in the spinnerette annulus of 272 $sec^{-1}$. The fiber size as extruded is 221 micrometers I.D. with a wall thickness of 37 micrometers.

The fibers are placed in a glycerol bath at 120 °C for 5 minutes before drawing 24 percent. The fibers are then leached in acetone under tension at ambient temperature for 1 hour and then dried under tension under vacuum at ambient temperature for 2 hours. Following drying, the fiber size is 173 micrometers I.D. with a wall thickness of 27 micrometers.

Upon testing for gas flux, the gas flux for nitrogen is determined to be 2.34 X $10^{-4}$ $cm^3$ (STP)/$cm^2$-sec-cmHg.

Example 19 - PEEK Membranes Fabricated With Drawing During Leach

A mixture of 50 weight percent VICTREX® PEEK and 50 weight percent diphenylsulfone is extruded into hollow fibers using a spinnerette with a 5 mil (0.125 mm) annulus at a temperature of 260 (spinnerette) - 310 (pack) °C. The fiber size as extruded is 117 micrometers I.D. with a wall thickness of 26 micrometers.

The fibers are leached in acetone under tension at ambient temperature for 1 hour and then dried stretched. The fibers are then dried under vacuum at ambient temperature under tension for 2 hours. Following drying, the fiber size is 74 micrometers I.D. with a wall thickness of 22 micrometers.

Analysis of the fibers shows a weight loss of 40.1 percent during the leaching step, resulting in a porosity of 31.9 percent based on final fiber size. Upon testing for gas flux, the gas flux for nitrogen is determined to be about 1.2 X $10^{-4}$ $cm^3$ (STP)/$cm^2$-sec-cmHg.

Example 20 - PEEK Membranes Fabricated With Drawing After Leach

A mixture of 50 weight percent VICTREX® PEEK and 50 weight percent diphenylsulfone is extruded into hollow fibers using a spinnerette with a 10 mil (0.25 mm) annulus at a temperature of 315 °C, with a shear rate in the spinnerette annulus or 272 $sec^{-1}$. The fiber size as extruded is 221 micrometers I.D. with a wall thickness of 37 micrometers.

The fibers are leached in acetone under tension at ambient temperature for 1 hour and then dried under tension under vacuum at ambient temperature under tension for 2 hours. The dried fiber is placed in a glycerol at 120 °C for 5 minutes before drawing 73 percent to a final fiber size of 111 micrometers I.D. with a wall thickness of 27 micrometers.

Analysis of the fibers shows a weight loss of 49.9 percent during the leaching step. Upon testing for gas flux, the gas flux for nitrogen is determined to be 12.2 X $10^{-4}$ $cm^3$ (STP)/$cm^2$-sec-cmHg.

Example 21 - PEEK Membranes Fabricated With Drawing After Leach

A mixture of 50 weight percent VICTREX® PEEK and 50 weight percent diphenylsulfone is extruded into hollow fibers using a spinnerette with a 5 mil (0.125 mm) annulus at a temperature of 260 (spinnerette) - 310 (pack) °C. The fiber size as extruded is 112 micrometers I.D. with a wall thickness of 29.5 micrometers.

The fibers are leached in acetone under tension at ambient temperature for 1 hour and then dried under vacuum at ambient temperature for 2 hours. The fibers are then placed in a glycerol bath at 120 °C for 5 minutes before drawing 73 percent to a final fiber size of 98.5 micrometers I.D. with a wall thickness of 24 micrometers.

Analysis of the fibers shows a weight loss of 39.4 percent during the leaching step, resulting in a porosity based upon final fiber size of 49.5 percent. Upon testing for gas flux, the gas flux for nitrogen is determined to be less than about 5.0 X $10^{-4}$ $cm^3$ (STP)/$cm^2$-sec-cmHg. The water flux through the

membrane after wetting the pores with ethanol is determined to be 1.6 ml/$m^2$-hr-cmHg.

The foregoing detaited description and examples are given to aid in the understanding of the invention. No unnecessary limitations are to be understood from the specification or the examples. The invention is not limited to the exact details stated because obvious modification will occur to those skilled in the art.

## Claims

1. A process for preparing a microporous poly(etheretherketone)-type (PEEK) membrane film or fiber, comprising:
   A. forming a mixture of
      (i) at least one unsulfonated PEEK-type polymer, and
      (ii) a polar organic solvent having at least one six membered ring structrue and a boiling point in a range between 175°C and 420°C capable of dissolving at least 10 weight percent of the PEEK-type polymer at a membrane film casting or fiber extrusion temperature;
   B. heating the mixture to a temperature at which the mixture becomes a homogeneous fluid;
   C. extruding or casting the homogeneous fluid such that a membrane film or fiber is formed;
   D. quenching or coagulating the membrane such that the membrane solidifies; and
   E. leaching the membrane such that at least a portion of the solvent for the PEEK-type polymer is removed from the membrane.
2. The process of Claim 1 wherein the membrane is extruded under conditions such that a hollow fiber is formed.
3. The process of Claim 2 wherein after leaching the fiber possesses interconnecting or non-interconnecting pores.
4. The process of Claim 3 wherein said hollow fiber has pores on the fiber surface ranging from $1X10^{-3}$ to 3 micrometers in diameter.
5. The process of Claim 3 wherein the hollow fiber before, during, or after the leach step is drawn or stretched to increase the flux of fluid through the membrane.
6. The process of Claim 1 wherein the membrane is extruded into a coagulation fluid.
7. A PEEK-type polymer membrane prepared according to Claim in having a porosity from 20 to 80 percent.
8. A hollow fiber of PEEK-type polymer prepared according to Claim 2 wherein the fiber outside diameter ranges from 100 to 1,000 micrometers and wall thickness ranges from 20 micrometers to 200 micrometers.
9. A process for preparing a film of a PEEK-type polymer, comprising dissolving a PEEK-type polymer in a polar organic solvent having a six-membered ring structure and a boiling point in a range from 175°C to 420°C and casting the PEEK-type polymer solution on a supporting structure comprising a smooth impervious surface.
10. The process of Claim 9 wherein the solution of polar organic solvent and PEEK-type polymer also contains a non-solvent for said PEEK-type polymer.
11. The process of Claim 9 wherein said supporting structure includes a web of a reinforcing fiber material.
12. The process of Claim 9 wherein the polar organic solvent is leached from the film to render the film porous.
13. The process of Claim 9 or 12 wherein said cast PEEK-type polymer solution is contacted with a coagulation fluid.
14. A film of a PEEK-type polymer obtainable by the process of any one of Claims 9 to 13.
15. The film of Claim 14 having interconnected pores, measured on the surface thereof, of at least 0.05 µm in diameter.

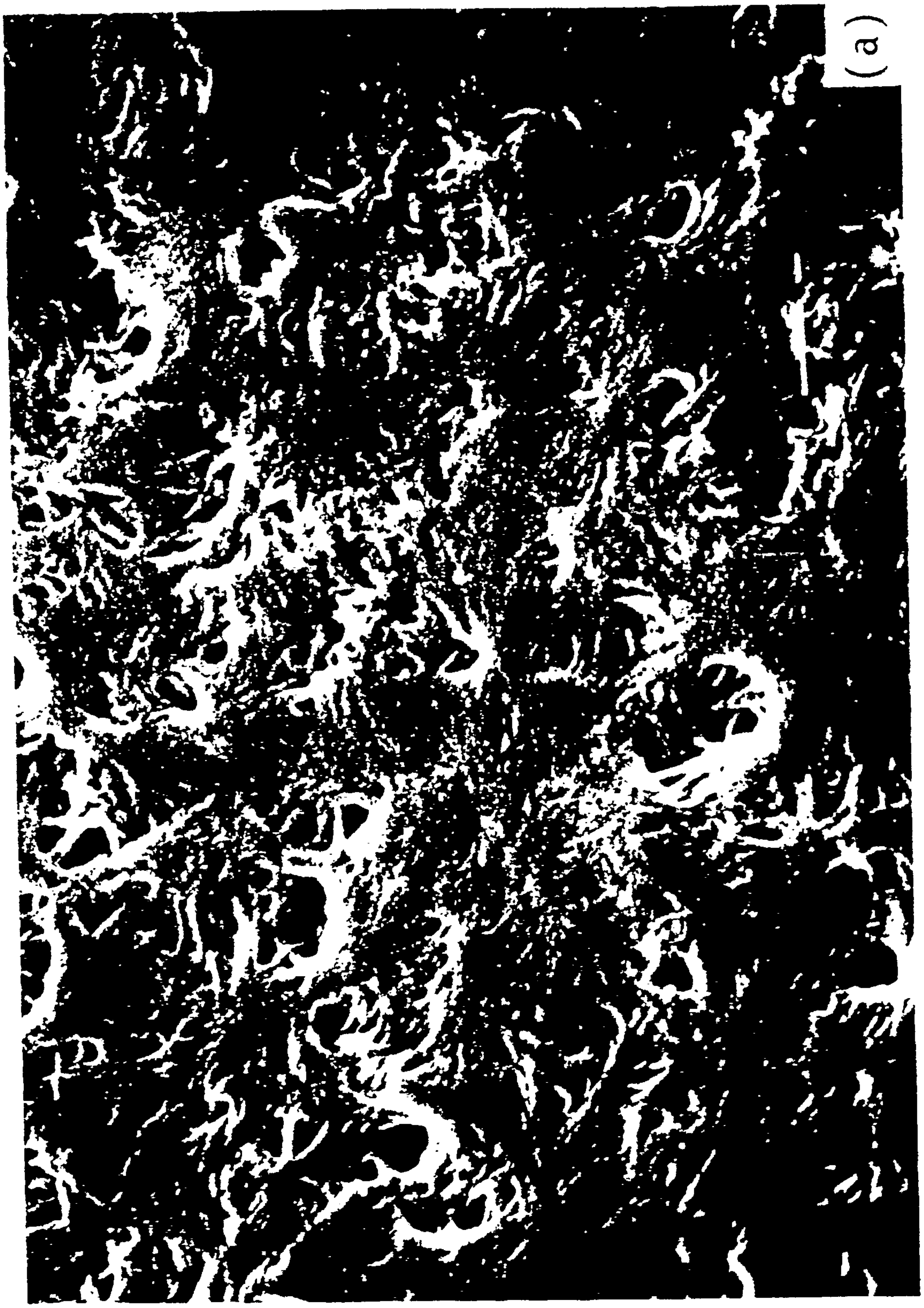


Fig. 1A

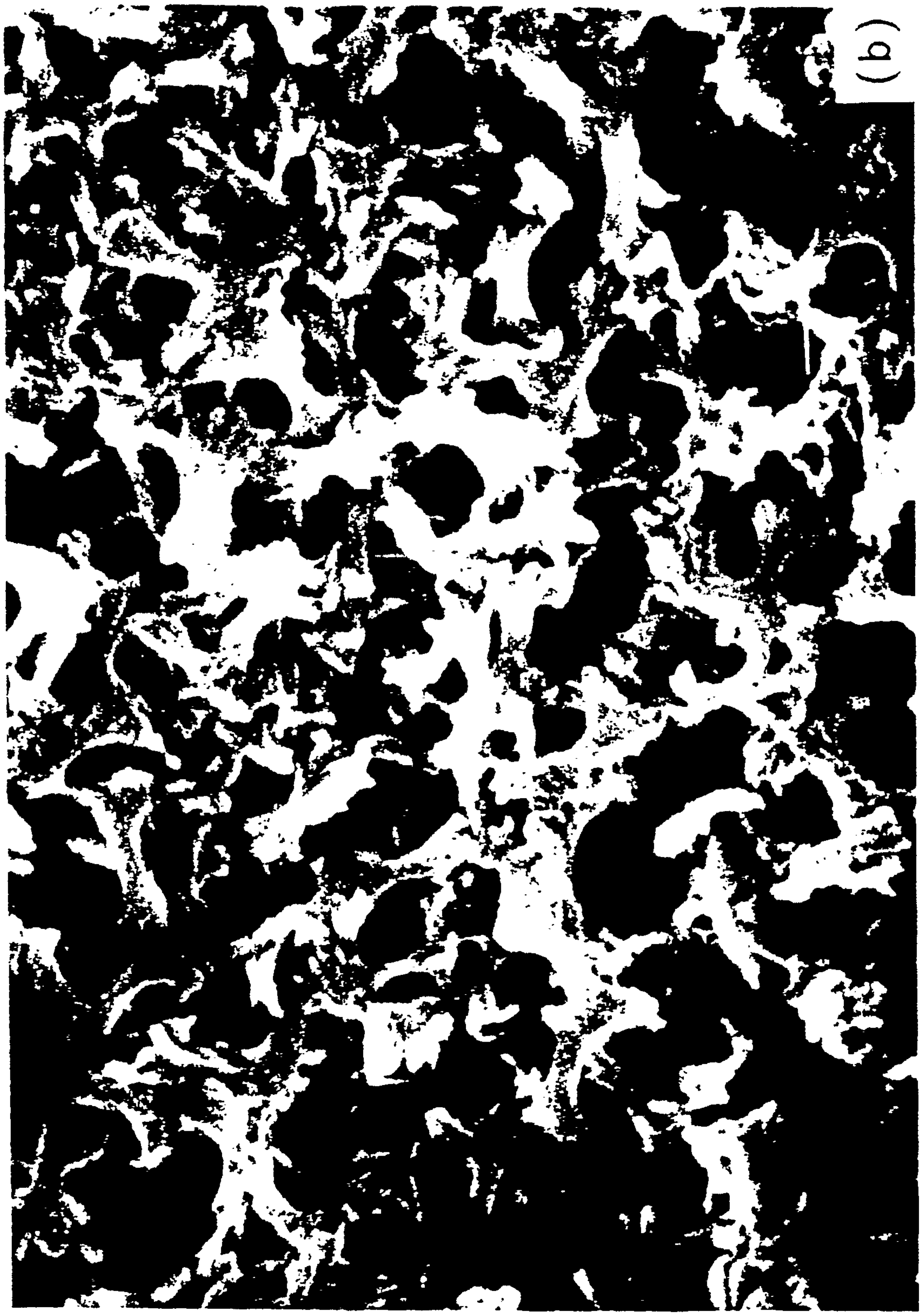


Fig. 1B

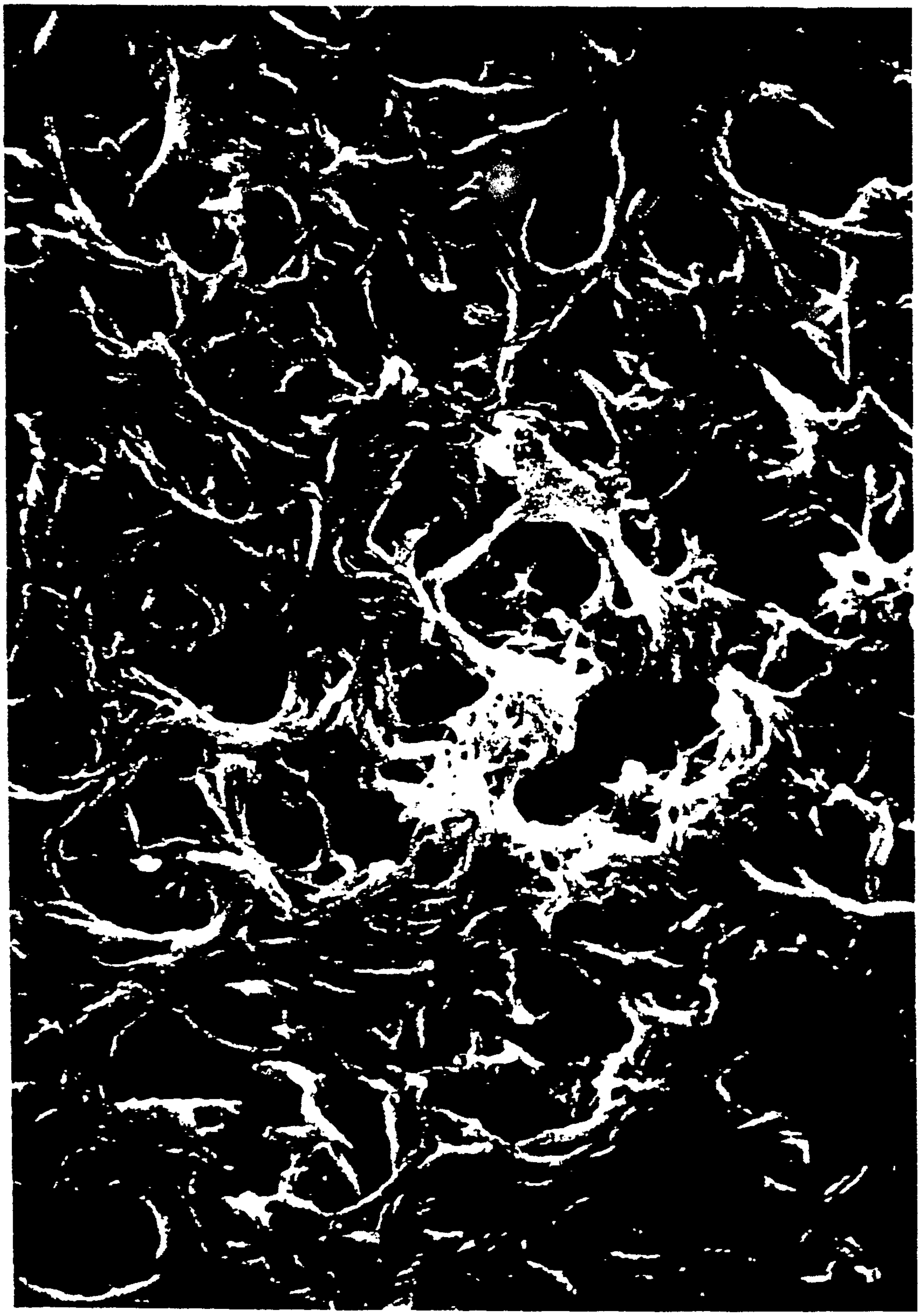

Fig. 2A

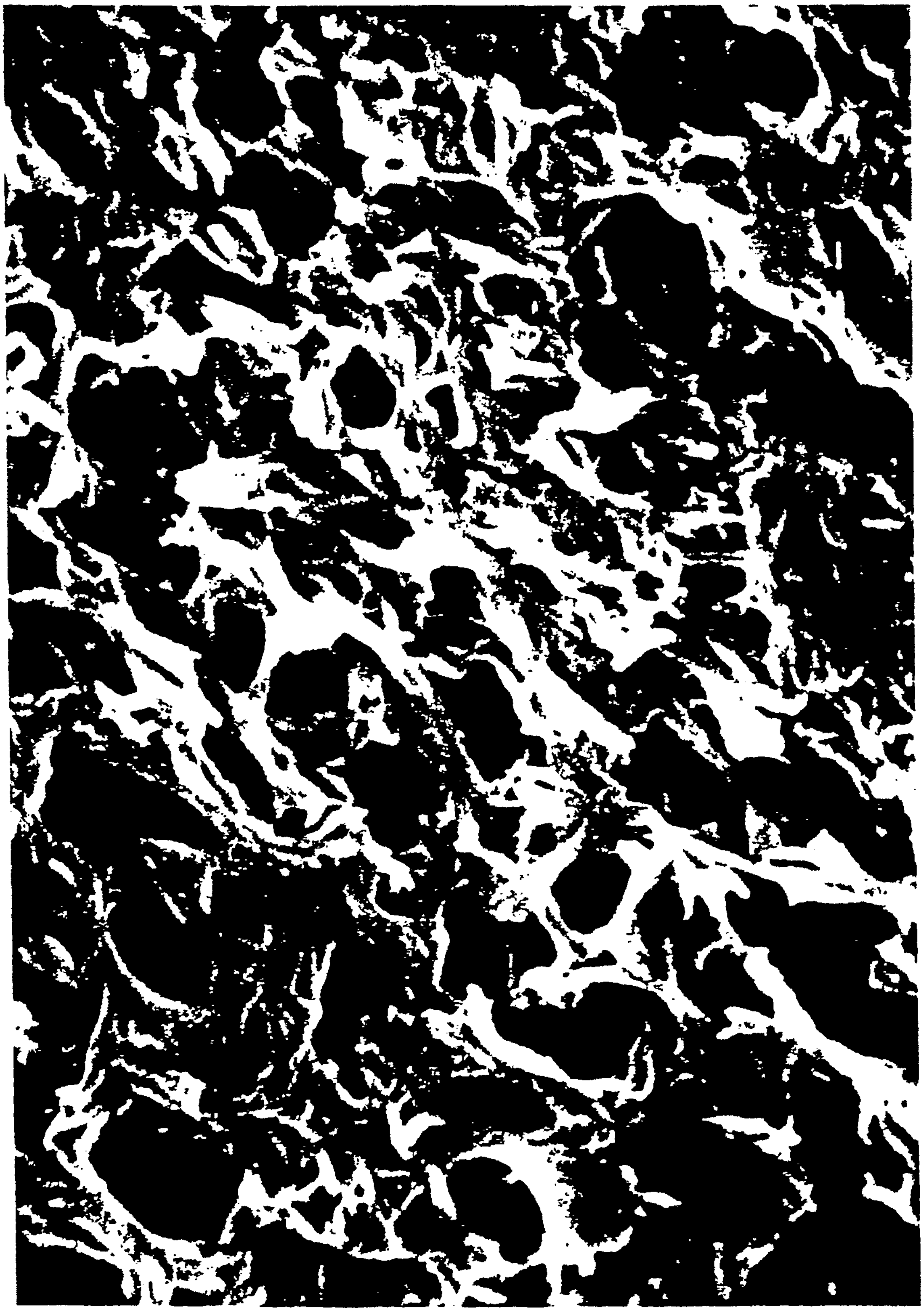

Fig. 2B

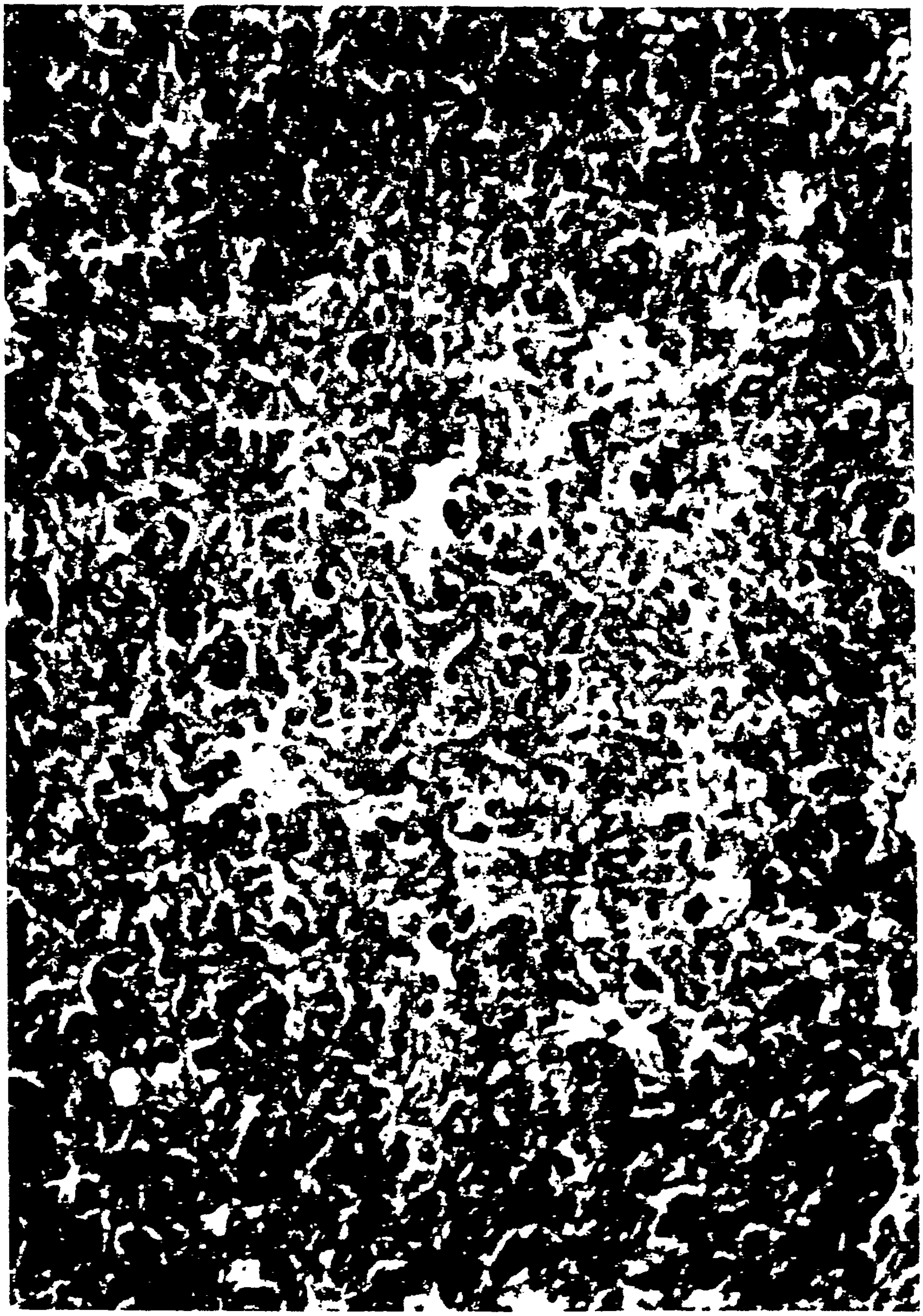

Fig. 3

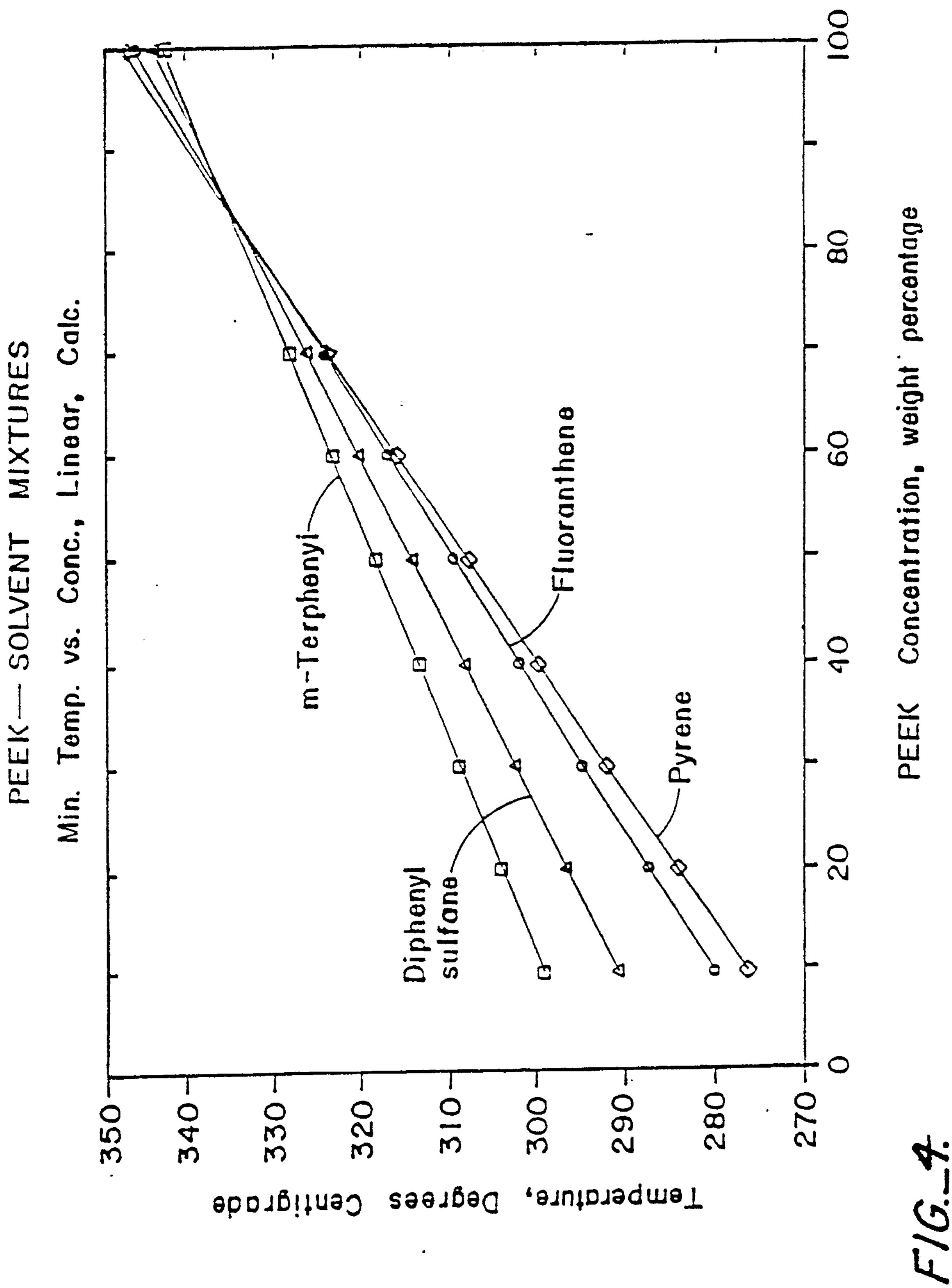
PEEK — SOLVENT MIXTURES
Min. Temp. vs. Conc., Linear, Calc.
Temperature, Degrees Centigrade
350
340
330
320
310
300
290
280
270
PEEK Concentration, weight percentage
0
20
40
60
80
100
m-Terphenyl
Fluoranthene
Diphenyl sulfone
Pyrene

FIG._4.

European Patent Office

# EUROPEAN SEARCH REPORT

Application Number

EP 90 10 2802

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X<br><br>Y | EP-A-0 297 744 (ICI)<br>* Abstract; page 2, lines 4-5; page 2, line 49 - page 3, line 13; page 3, line 44 - page 4, line 1; examples 1,4,6,7,9,12,13; claims 1,2,4,5,7,9,10,12,14 * | 1,6,9, 11-15<br><br>2-5,7,8 | B 01 D 71/52<br>B 01 D 67/00<br>D 01 D 5/24<br>C 08 J 9/28<br>C 08 J 5/18<br>D 01 F 6/66 //<br>C 08 L 71:00 |
| X | GB-A-2 180 790 (ICI)<br>* Abstract; page 1, lines 55-56; page 2, lines 56-57; page 3, lines 33-51; example; claims 1-6 * | 1 | |
| Y | EP-A-0 261 734 (X-FLOW B.V.)<br>* Abstract; column 3, lines 14-18 * | 2-5,7,8 | |
| X | CHEMICAL ABSTRACTS, vol. 110, no. 14, 3rd April 1989, page 20, abstract no. 115619r, Columbus, Ohio, US; Y. OOKOSHI et al.: "PEEK [poly(oxy-1,4-phenyleneoxy-1,4-phenylene-carbonyl-1,4-phenylene)] gel from benzophenone solution", & SEN'I GAKKAISHI 1988, 44(12), 634-6<br>* Abstract * | 1,9,12, 14,15 | TECHNICAL FIELDS SEARCHED (Int. Cl.5)<br><br>B 01 D<br>C 08 J<br>D 01 D<br>D 01 F |
| X | CHEMICAL ABSTRACTS, vol. 104, no. 4, 27th January 1986, pages 15-16, abstract no. 20045n, Columbus, Ohio, US; A.J. LOVINGER et al.: "Electron-microscopic investigation of the morphology of a melt-crystallized polyaryletherketone", & J. APPL. PHYS. 1985, 58(8), 2843-53<br>* Abstract * | 9 | |

The present search report has been drawn up for all claims

| Place of search | Date of completion of the search | Examiner |
|---|---|---|
| THE HAGUE | 22-05-1990 | HOORNAERT P.G.R.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document